(19) Europäisches Patentamt
European Patent Office
Office européen des brevets

(11) **EP 4 145 340 B1**

(12) **EUROPEAN PATENT SPECIFICATION**

(45) Date of publication and mention
of the grant of the patent:
**22.07.2026 Bulletin 2026/30**

(21) Application number: **20937270.5**

(22) Date of filing: **29.05.2020**

(51) International Patent Classification (IPC):
**G06T 7/246** (2017.01)    **G08G 1/00** (2006.01)

(52) Cooperative Patent Classification (CPC):
**G08G 1/22; H04L 69/40; H04W 4/46;** G08G 1/095;
Y02D 30/70

(86) International application number:
**PCT/CN2020/093532**

(87) International publication number:
**WO 2021/237745 (02.12.2021 Gazette 2021/48)**

(54) **METHOD FOR IDENTIFYING ABNORMAL VEHICLE PARAMETERS IN VEHICLE PLATOON AND TERMINAL DEVICE**

VERFAHREN ZUR IDENTIFIZIERUNG ABNORMALER FAHRZEUGPARAMETER IN EINER FAHRZEUGKOLONNE UND ENDGERÄTEVORRICHTUNG

PROCÉDÉ D'IDENTIFICATION DE PARAMÈTRES DE VÉHICULE ANORMAUX DANS UN PELOTON DE VÉHICULES ET DISPOSITIF TERMINAL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**08.03.2023 Bulletin 2023/10**

(73) Proprietor: Yinwang Intelligent Technologies Co., Ltd.
**Shenzhen, Guangdong 518110 (CN)**

(72) Inventors:
• **ZHOU, Wei**
**Shenzhen, Guangdong 518129 (CN)**
• **CHEN, Xiaohua**
**Shenzhen, Guangdong 518129 (CN)**
• **LIU, Yalin**
**Shenzhen, Guangdong 518129 (CN)**
• **YU, Yao**
**Shenzhen, Guangdong 518129 (CN)**
• **YANG, Huiming**
**Shenzhen, Guangdong 518129 (CN)**

(74) Representative: **MERH-IP Matias Erny Reichl Hoffmann**
**Patentanwälte PartG mbB**
**Paul-Heyse-Straße 29**
**80336 München (DE)**

(56) References cited:
EP-A1- 3 614 353          CN-A- 107 644 206
CN-A- 107 826 118        CN-A- 108 932 843
CN-A- 110 992 677        US-A1- 2018 190 119
US-A1- 2018 302 484     US-B1- 10 497 258

## Description

### TECHNICAL FIELD

This application relates to the vehicle to everything field, and more specifically, to a method for identifying a parameter of an abnormal vehicle in a vehicle queue and a terminal device.

### BACKGROUND

Intelligent and connected vehicles (Intelligent and Connected Vehicles, ICV) have a vehicle to everything (Vehicle to Everything, V2X) function. A plurality of ICVs that are sequentially adjacent to each other constitute an intelligent and connected vehicle queue. Cooperative control on the intelligent and connected vehicle queue can reduce energy consumption and emission of the vehicles and also alleviate traffic congestion and improve driving safety and transportation efficiency. However, currently in an era of non-fully intelligent and connected transportation, not all vehicles driving on a road are intelligent and connected vehicles, and non-intelligent and connected vehicles are further included. In the non-fully intelligent and connected transportation environment, a non-intelligent and connected vehicle may appear in an intelligent and connected vehicle queue at any time, the intelligent and connected vehicle queue may be disrupted at any time, and an unknown vehicle appears in the intelligent and connected vehicle queue. Therefore, cooperative control cannot be performed on the intelligent and connected vehicle queue.

Therefore, when the intelligent and connected vehicle queue is disrupted, how to identify a number of vehicles in an abnormal area of the vehicle queue and location and velocity information of each vehicle to perform cooperative control on the intelligent and connected vehicle queue is an urgent problem to be resolved.

Document US 2018/190119 A1 generally discloses a platoon management control system and method for local detection and determination of a non-platooning vehicle inserted or otherwise disposed between and/or adjacent to one or more platooning vehicle(s). A platooning vehicle determines a forward physical distance between itself and a vehicle physically ahead, and compares the determined physical distance with a value of a rearward distance to the platooning vehicle received from a next ahead platooning vehicle. The vehicle physically ahead is determined to be the next ahead platooning vehicle in accordance with a correspondence between the determined physical distance and the received value of the rearward distance. Conversely, the vehicle physically ahead is determined to be a non-platooning vehicle in accordance with a mis-correspondence between the determined physical distance and the received value of the rearward distance.

### SUMMARY

This application provides a method for identifying a parameter of an abnormal vehicle in a vehicle queue and a terminal device. In the method, a number of vehicles in an abnormal area of an intelligent and connected vehicle queue and location and velocity information of each vehicle in the abnormal area may be identified, so that the abnormal area of the intelligent and connected vehicle queue is restored to order, thereby implementing cooperative control on the intelligent and connected vehicle queue. Therefore, energy consumption and emission of the vehicles can be reduced, and also, traffic congestion can be alleviated, and driving safety and transportation efficiency can be improved. In particular, embodiments of the present application are defined by the independent claims. Additional features of embodiments of the invention are presented in the dependent claims. In the following, parts of the description and drawings referring to former embodiments which do not necessarily comprise all features to implement embodiments of the claimed invention are not represented as embodiments of the invention but as examples useful for understanding the embodiments of the invention. Embodiments of the present application (or the present disclosure) provide a method for identifying a parameter of an abnormal vehicle in a vehicle queue, a terminal device, computer-readable storage medium and a chip.

According to a first aspect, a method for identifying a parameter of an abnormal vehicle in a vehicle queue is provided. The method includes: determining a current driving scenario of a target vehicle based on driving trajectory data of the target vehicle and a current real-time map of the target vehicle, where the driving scenario of the target vehicle is a city road driving scenario or a highway driving scenario, and the target vehicle is an intelligent and connected vehicle in an intelligent and connected vehicle queue; selecting a vehicle trajectory generation algorithm in the current driving scenario of the target vehicle based on the current driving scenario of the target vehicle; determining at least one abnormal area included ahead of the target vehicle at a moment Tb, where the at least one abnormal area is an abnormal area of the intelligent and connected vehicle queue in which the target vehicle is located, and the moment Tb is a current moment; identifying, based on the selected vehicle trajectory generation algorithm and a machine learning algorithm, a number of vehicles in each of the at least one abnormal area and location information and velocity information of each vehicle included in each abnormal area at a moment Ta, where the moment Ta is a calibration moment in a historical driving process of the target vehicle; and identifying, based on the selected vehicle trajectory generation algorithm and the number of vehicles in each abnormal area and the location information and the velocity information of each vehicle included in each abnormal area at the moment Ta, a number of vehicles in each abnormal area and location information and velocity information of each vehicle included in each abnormal area at the moment Tb.

Therefore, the number of vehicles in the abnormal area, the location information of each vehicle in the abnormal area, and the velocity information of each vehicle in the abnormal area at the moment Tb are identified by identifying the number of vehicles in the abnormal area and the location information and the velocity information of each vehicle in the abnormal area at the moment Ta in determined different driving scenarios, so that a number of vehicles in the abnormal area of the intelligent and connected vehicle queue and location and velocity information of each vehicle in the abnormal area can be identified, thereby making the abnormal area of the intelligent and connected vehicle queue be restored to order.

With reference to the first aspect, in some implementations of the first aspect, the identifying, based on the selected vehicle trajectory generation algorithm and a machine learning algorithm, a number of vehicles in each of the at least one abnormal area and location information and velocity information of each vehicle included in each abnormal area at a moment Ta includes: calculating a root mean square error (Root Mean Square Error, RMSE) between a theoretical driving trajectory and a real driving trajectory of the target vehicle when the number of vehicles in each abnormal area is $K$, where $K \in \{1, ..., N\}$, N is a maximum value N of the number of vehicles included in each abnormal area, and values of 1 to N are traversed for K; obtaining location information and velocity information of each vehicle in the abnormal area when the RMSE meets a first condition; and at a moment Ta, determining a number of vehicles and location information and velocity information of each vehicle that correspond to an RMSE meeting a second condition in N determined RMSEs.

With reference to the first aspect, in some implementations of the first aspect, the determining at least one abnormal area included ahead of the target vehicle at a moment Tb includes: obtaining real driving trajectories of a plurality of intelligent and connected vehicles ahead of the target vehicle from a moment Tc to the moment Tb, where the moment Tc is a calibration moment in the historical driving process of the target vehicle; calculating theoretical driving trajectories of the plurality of intelligent and connected vehicles ahead of the target vehicle from the moment Tc to the moment Tb; calculating a difference between a theoretical driving trajectory and a real driving trajectory of each of the plurality of intelligent and connected vehicles; and determining, based on the difference between the theoretical driving trajectory and the real driving trajectory of each intelligent and connected vehicle and a first threshold, the at least one abnormal area included ahead of the target vehicle at the moment Tb.

With reference to the first aspect, in accordance with the invention, when a radar or a camera is configured in a front part of each intelligent and connected vehicle in the intelligent and connected vehicle queue, a distance of each of the at least one abnormal area is from the first intelligent and connected vehicle adjacent to the start of each abnormal area to the end of each abnormal area.

With reference to the first aspect, also in accordance with the invention, when radars or cameras are configured in both a front part and a rear part of the intelligent and connected vehicle, a distance of each of the at least one abnormal area is an area between an adjacent vehicle behind the first intelligent and connected vehicle adjacent to the start of each abnormal area and a vehicle ahead that is adjacent to the end of each abnormal area.

In this case, when radars or cameras are configured in both a front part and a rear part of a vehicle in the vehicle queue of the intelligent and connected vehicle, a length of the abnormal area of the vehicle queue can be shortened, so that identification accuracy is improved.

With reference to the first aspect, in some implementations of the first aspect, the calculating a root mean square error RMSE between a theoretical driving trajectory and a real driving trajectory of the target vehicle when the number of vehicles in each abnormal area is K includes: when the number of vehicles in the abnormal area at the moment Ta is K, randomly generating location information and velocity information of each vehicle in the abnormal area at the moment Ta; calculating a theoretical trajectory of an adjacent vehicle ahead of the target vehicle from the moment Ta to the moment Tb based on the vehicle trajectory generation algorithm; and calculating an RMSE between a real trajectory and the theoretical trajectory of the adjacent vehicle ahead of the target vehicle from Ta to Tb based on the theoretical driving trajectory and the real driving trajectory of the adjacent vehicle ahead of the target vehicle.

With reference to the first aspect, in some implementations of the first aspect, the calculating a maximum number N of vehicles in the abnormal area at the moment Ta includes: determining a length of the abnormal area at the moment Ta; and determining a maximum number N of vehicles in the abnormal area based on the length of the abnormal area, an average vehicle length, and a minimum gap between two adjacent vehicles.

With reference to the first aspect, in some implementations of the first aspect, the method further includes: determining vehicle trajectory generation algorithms in different driving scenarios. The vehicle trajectory generation algorithms include a city-road vehicle trajectory generation algorithm and a highway vehicle trajectory generation algorithm.

According to a second aspect, a terminal device is provided. The terminal device includes: a determining unit, where the determining unit is configured to determine a current driving scenario of a target vehicle based on driving trajectory data of the target vehicle and a current real-time map of the target vehicle, where the driving scenario of the target vehicle is a city road driving scenario or a highway driving scenario, and the target vehicle is an intelligent and connected vehicle in an intelligent and connected vehicle queue; and a processing unit, where the processing unit is configured to select a vehicle trajectory generation algorithm in the current driving scenario of the target vehicle based on the current driving scenario of the target vehicle. The processing unit is further configured to determine at least one abnormal area included ahead of the target vehicle at a moment Tb. The at least one abnormal area is an abnormal area of the intelligent and connected vehicle queue in which the target vehicle is located, and the moment Tb is a current moment. The processing unit is further configured to identify, based on the selected vehicle trajectory generation algorithm and a machine learning algorithm, a number of vehicles in each of the at least one abnormal area and location information and velocity information of each vehicle included in each abnormal area at a moment Ta. The moment Ta is a calibration moment in a historical driving process of the target vehicle. The processing unit is further configured to identify, based on the selected vehicle trajectory generation algorithm and the number of vehicles in each abnormal area and the location information and the velocity information of each vehicle included in each abnormal area at the moment Ta, a number of vehicles in each abnormal area and location information and velocity information of each vehicle included in each abnormal area at the moment Tb.

With reference to the second aspect, in some implementations of the second aspect, the processing unit is specifically configured to: calculate a root mean square error RMSE between a theoretical driving trajectory and a real driving trajectory of the target vehicle when the number of vehicles in each abnormal area is K, where $K \in \{1, ..., N\}$, N is a maximum value N of the number of vehicles included in each abnormal area, and values of 1 to N are traversed for K; obtain location information and velocity information of each vehicle in the abnormal area when the RMSE meets a first condition; and at the moment Ta, determine a number of vehicles and location information and velocity information of each vehicle that correspond to an RMSE meeting a second condition in N determined RMSEs.

With reference to the second aspect, in some implementations of the second aspect, the processing unit is specifically configured to: obtain real driving trajectories of a plurality of intelligent and connected vehicles ahead of the target vehicle from a moment Tc to the moment Tb, where the moment Tc is a calibration moment in the historical driving process of the target vehicle; calculate theoretical driving trajectories of the plurality of intelligent and connected vehicles ahead of the target vehicle from the moment Tc to the moment Tb; calculate a difference between a theoretical driving trajectory and a real driving trajectory of each of the plurality of intelligent and connected vehicles; and determine, based on the difference between the theoretical driving trajectory and the real driving trajectory of each intelligent and connected vehicle and a first threshold, the at least one abnormal area included ahead of the target vehicle at the moment Tb.

With reference to the second aspect, in some implementations of the second aspect, when a radar or a camera is configured in a front part of each intelligent and connected vehicle in the intelligent and connected vehicle queue, a distance of each of the at least one abnormal area is an area between the first intelligent and connected vehicle adjacent to the start of each abnormal area and a vehicle ahead that is adjacent to the end of each abnormal area.

With reference to the second aspect, in some implementations of the second aspect, when radars or cameras are configured in both a front part and a rear part of each intelligent and connected vehicle in the intelligent and connected vehicle queue, a distance of each of the at least one abnormal area is an area between an adjacent vehicle behind the first intelligent and connected vehicle adjacent to the start of each abnormal area and a vehicle ahead that is adjacent to the end of each abnormal area.

With reference to the second aspect, in some implementations of the second aspect, the processing unit is specifically configured to: when the number of vehicles in the abnormal area at the moment Ta is K, randomly generate location information and velocity information of each vehicle in the abnormal area at the moment Ta; calculate a theoretical trajectory of an adjacent vehicle ahead of the target vehicle from the moment Ta to the moment Tb; and calculate an RMSE between a real trajectory and the theoretical trajectory of the adjacent vehicle ahead of the target vehicle from Ta to Tb based on the theoretical driving trajectory and the real driving trajectory of the adjacent vehicle ahead of the target vehicle.

With reference to the second aspect, in some implementations of the second aspect, the processing unit is further configured to: determine a length of the abnormal area at the moment Ta; and determine a maximum number N of vehicles in the abnormal area based on the length of the abnormal area, an average vehicle length, and a minimum gap between two adjacent vehicles.

With reference to the second aspect, in some implementations of the second aspect, the processing unit is further configured to determine vehicle trajectory generation algorithms in different driving scenarios. The vehicle trajectory generation algorithms include a city-road vehicle trajectory generation algorithm and a highway vehicle trajectory generation algorithm.

According to a third aspect, a terminal device is provided. The terminal device includes a processor, the processor is connected to a memory, the memory is configured to store a computer program, and the processor is configured to execute the computer program stored in the memory, so that the terminal device performs the method in any one of the first aspect and the possible implementations of the first aspect.

According to a fourth aspect, a computer-readable storage medium is provided. The computer-readable storage medium stores a computer program, and when the computer program is run, the method in any one of the first aspect and the possible implementations of the first aspect is implemented.

According to a fifth aspect, a chip is provided. The chip includes a processor and an interface. The processor is configured to read instructions to perform the method in any one of the first aspect and the possible implementations of the first aspect.

Optionally, the chip may further include a memory. The memory stores instructions. The processor is configured to execute the instructions stored in the memory or other instructions.

## BRIEF DESCRIPTION OF DRAWINGS

FIG. 1a is a schematic diagram of driving of an intelligent and connected vehicle queue on a city road;
FIG. 1b is a schematic diagram of driving of an intelligent and connected vehicle queue on a highway;
FIG. 2 is a schematic diagram of a communication sight distance of an intelligent and connected vehicle;
FIG. 3a shows a scenario in which an intelligent and connected vehicle queue is disrupted;
FIG. 3b shows another scenario in which an intelligent and connected vehicle queue is disrupted;
FIG. 3c shows another scenario in which an intelligent and connected vehicle queue is disrupted;
FIG. 4 is a schematic diagram of a scenario of abnormal-vehicle parameter identification during vehicle queue driving;
FIG. 5 is a schematic flowchart of a method for identifying a vehicle parameter based on network information during vehicle queue driving according to an embodiment of this application;
FIG. 6 is a schematic diagram of driving of an intelligent and connected vehicle queue on a city road;
FIG. 7 is a schematic diagram of a city-road vehicle trajectory generation algorithm;
FIG. 8 is a schematic diagram of driving of an intelligent and connected vehicle queue on a highway;
FIG. 9 is a schematic diagram of a highway vehicle trajectory generation algorithm;
FIG. 10 is a schematic diagram of abnormal-vehicle parameter identification during vehicle queue driving;
FIG. 11 is a schematic diagram of obtaining a number of vehicles in an abnormal area and location and velocity information of the vehicles at a moment Tb on a highway based on a result of identification at a moment Ta;
FIG. 12 is a schematic diagram of obtaining a number of vehicles in an abnormal area and location and velocity information of the vehicles at a moment Tb on a city road based on a result of identification at a moment Ta;
FIG. 13a is a schematic diagram of configuration of an ICV in a highway driving scenario;
FIG. 13b is a schematic diagram of configuration of an ICV in a highway driving scenario;
FIG. 14a is a schematic diagram of configuration of an ICV in a city road driving scenario;
FIG. 14b is a schematic diagram of configuration of an ICV in a city road driving scenario; and
FIG. 15 is a schematic block diagram of a terminal device 200 according to an embodiment of this application.

## DESCRIPTION OF EMBODIMENTS

To make the objectives, technical solutions, and advantages of this application clearer, the following clearly and completely describes the technical solutions in this application with reference to the accompanying drawings in this application. It is clear that the described embodiments are a part rather than all of embodiments of this application.

A terminal device in this application may be a vehicle-mounted terminal device. If the terminal device is located in a vehicle (for example, placed in the vehicle or installed in the vehicle), the terminal device may be considered as a vehicle-mounted terminal device. The vehicle-mounted terminal device such as a center console is also referred to as an on-board unit (on-board unit, OBU).

In this application, the terminal device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more computer operating systems that implement service processing by using a process (process), for example, a Linux operating system, a Unix operating system, an Android operating system, an iOS operating system, a Windows operating system, and a distributed system (distributed system) established on the Internet. A specific structure of an execution body of the method provided in this application is not particularly limited, provided that data processing can be performed according to the method provided in this application by running a program that records code of the method provided in this application. For example, the method provided in this application may be performed by a terminal device, a function module that can invoke the program and execute the program, or an operating system.

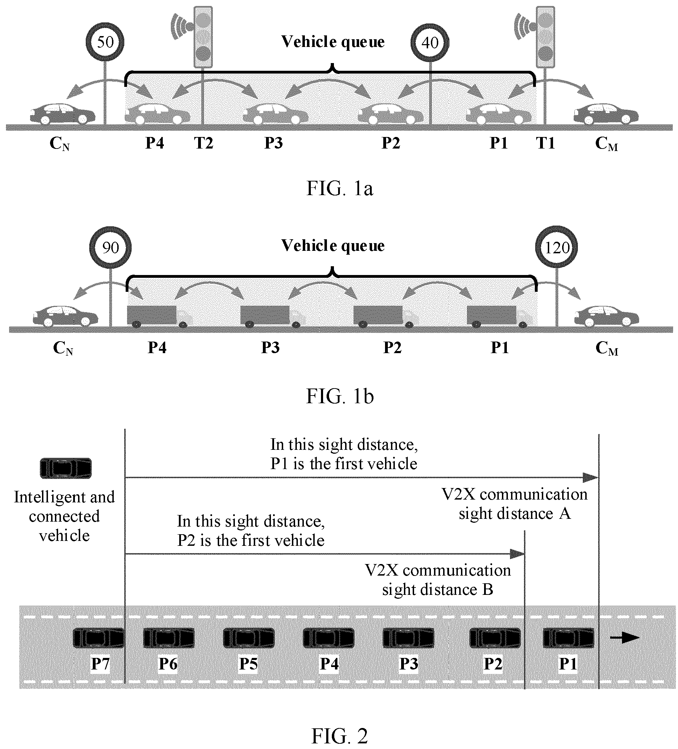

Intelligent and connected vehicles (Intelligent and Connected Vehicles, ICV) have a vehicle to everything (Vehicle to Everything, V2X) function. A plurality of ICVs that are sequentially adjacent to each other constitute an intelligent and connected vehicle queue. Each intelligent and connected vehicle in the intelligent and connected vehicle queue has an identity. Cooperative control on the intelligent and connected vehicle queue can reduce energy consumption and emission of the vehicles and also alleviate traffic congestion and improve driving safety and transportation efficiency. FIG. 1a and FIG. 1b are schematic diagrams of driving of an intelligent and connected vehicle queue in different driving scenarios. FIG. 1a is a schematic diagram of driving of an intelligent and connected vehicle queue on a city road. FIG. 1b is a schematic diagram of driving of an intelligent and connected vehicle queue on a highway. All vehicles in FIG. 1a and FIG. 1b are intelligent and connected vehicles, and have the V2X function.

The intelligent and connected vehicle has the V2X function. Each intelligent and connected vehicle has a communication sight distance. The communication sight distance is a distance for which the intelligent and connected vehicle can communicate. FIG. 2 is a schematic diagram of a communication sight distance of an intelligent and connected vehicle. In FIG. 2, an intelligent and connected vehicle queue includes seven intelligent and connected vehicles. In a case, a communication sight distance of P7 can reach P1, and P1 to P6 can directly communicate with P7. In another case, a communication sight distance of P7 can reach P2, and P2 to P6 can directly communicate with P7, but P1 cannot directly communicate with P7, and communication data between P7 and P1 may be forwarded by using the vehicle P2.

In this embodiment of this application, for ease of description, a communication sight distance of a target vehicle can cover an entire intelligent and connected vehicle queue by default. It should be understood that the communication sight distance of the target vehicle may not cover the entire intelligent and connected vehicle queue, and a driving trajectory of a vehicle that is in the intelligent and connected vehicle queue and that cannot be covered by the communication sight distance of the target vehicle may be forwarded to the target vehicle by using another vehicle. The another vehicle is an intelligent and connected vehicle that is in the intelligent and connected vehicle queue and that can be covered by the communication sight distance of the target vehicle.

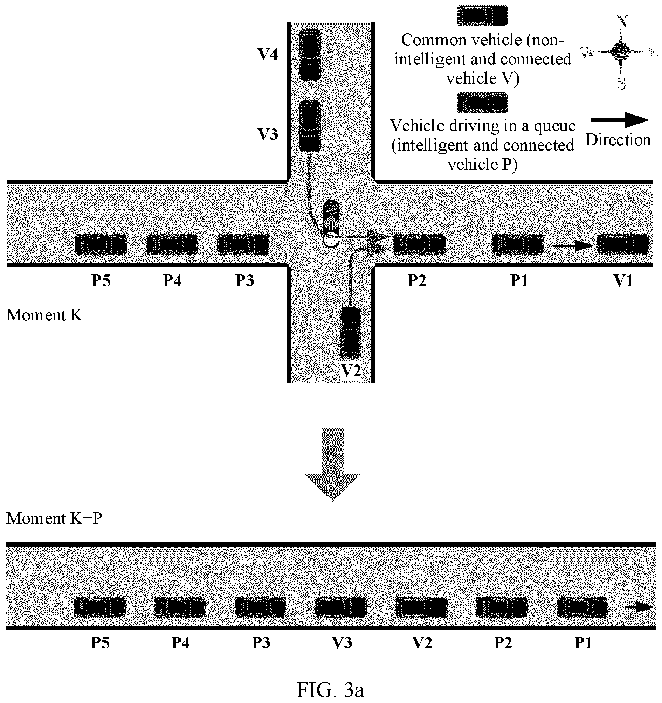

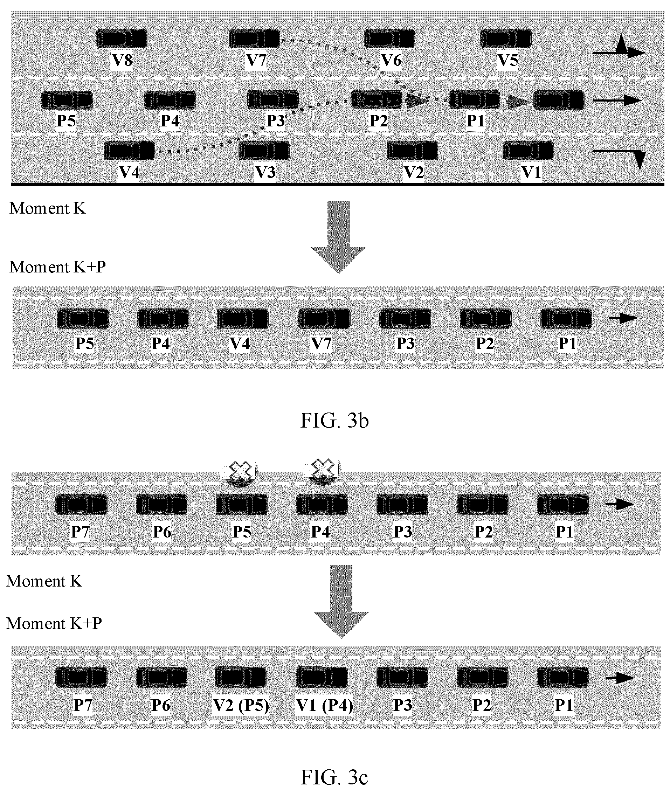

However, currently in an era of non-fully intelligent and connected transportation, not all vehicles driving on a road are intelligent and connected vehicles, and non-intelligent and connected vehicles are further included. In the non-fully intelligent and connected transportation environment, a non-intelligent and connected vehicle may appear in the intelligent and connected vehicle queue at any time, and the intelligent and connected vehicle queue may be disrupted at any time. As shown in FIG. 3a, at a crossroad, another vehicle joins, and an intelligent and connected vehicle queue is disrupted. As shown in FIG. 3b, during normal driving, another vehicle forcibly joins (for example, changes a lane), and an intelligent and connected vehicle queue is disrupted. As shown in FIG. 3c, a V2X device of a vehicle in a queue is faulty, the intelligent and connected vehicle may become a common vehicle, and the intelligent and connected vehicle queue is disrupted.

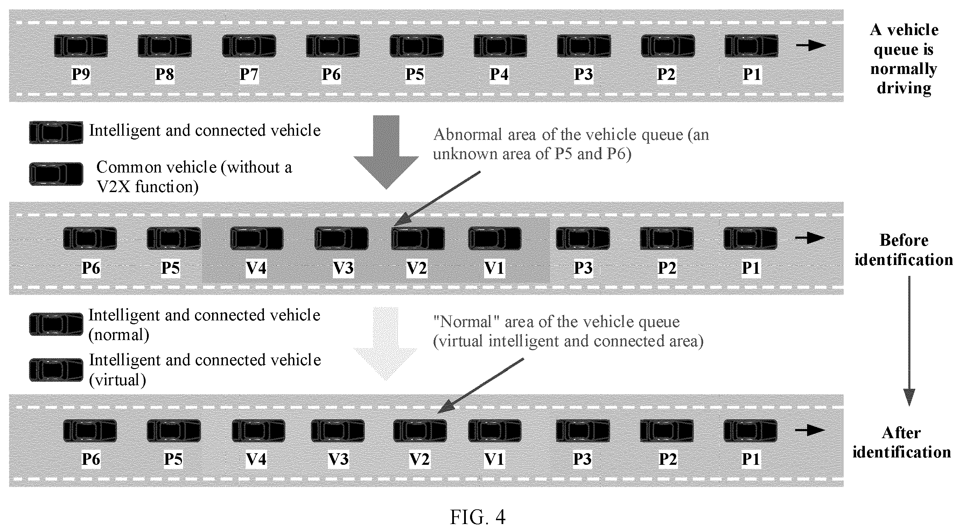

When an intelligent and connected vehicle queue is disrupted, and an unknown vehicle appears in the intelligent and connected vehicle queue, cooperative control cannot be performed on the intelligent and connected vehicle queue. How to restore the disrupted intelligent and connected vehicle queue from "disorder" to "order" (being intelligent and connected), that is, how to identify a number of vehicles in an abnormal area of the vehicle queue and location and velocity information of each vehicle is an urgent problem to be resolved. In FIG. 4, P1 to P9 are intelligent and connected vehicles. Because another vehicle forcibly changes a lane or a V2X device of P4 is faulty, non-intelligent and connected vehicles appear between P3 and P5. Because P5 does not know location and velocity information of each of V1, V2, ..., and VN-1, P5 is changed from cooperative adaptive cruise control (Cooperative Adaptive Cruise Control, CACC) to adaptive cruise control (Adaptive Cruise Control, ACC). In this driving scenario, to jump from ACC control to CACC control, a number of vehicles in an abnormal area of a vehicle queue and location and velocity information of each vehicle in the abnormal area need to be identified. After the number of vehicles in the abnormal area of the vehicle queue and the location and velocity information of each vehicle in the abnormal area are identified, the abnormal area of the vehicle queue may be virtualized as an intelligent and connected area, and the intelligent and connected vehicle queue returns to normal.

In view of this, this application provides a method for identifying a parameter of an abnormal vehicle in a vehicle queue. In the method, a number of vehicles in an abnormal area of an intelligent and connected vehicle queue and location and velocity information of each vehicle in the abnormal area may be identified, so that the abnormal area of the intelligent and connected vehicle queue is restored to order.

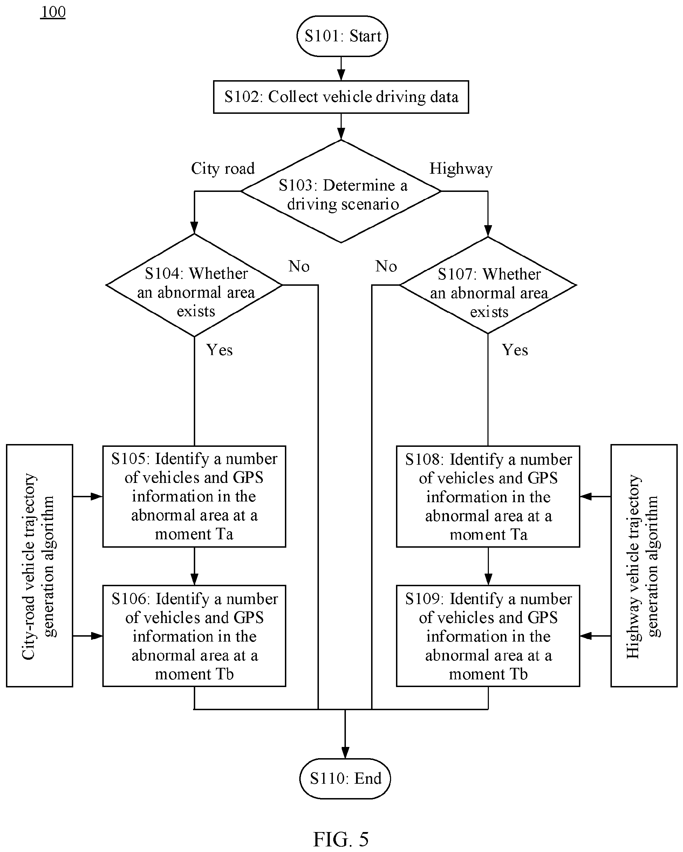

With reference to FIG. 5, the following describes in detail a method 100 for identifying a parameter of an abnormal vehicle in a vehicle queue according to this application. FIG. 5 is a schematic flowchart of the method 100 for identifying a parameter of an abnormal vehicle in a vehicle queue according to an embodiment of this application. The method 100 may be applied to the scenario shown in FIG. 3.

It should be understood that in this application, an example in which a target vehicle is used as an execution body performing the method is used to describe the method. The target vehicle is an ICV. As an example instead of a limitation, the execution body performing the method may be alternatively an apparatus, for example, a vehicle-mounted terminal device named an on-board unit OBU, in the target vehicle.

It should be further understood that the method may be alternatively performed by a server. That is, the server is configured to control an intelligent and connected vehicle queue, information collected by each intelligent and connected vehicle in the intelligent and connected vehicle queue is sent to the server, and the server identifies a parameter of an abnormal vehicle in the vehicle queue, and sends an identification result to each intelligent and connected vehicle in the intelligent and connected vehicle queue.

As shown in FIG. 5, the method 100 shown in FIG. 5 may include S101 to S110. The following describes steps in the method 100 in detail with reference to FIG. 5.

S101: Start an identification procedure.

S102: The target vehicle collects current driving data.

First, the target vehicle collects driving trajectory data of the vehicle, driving trajectory data of a vehicle ahead, and the like by using a vehicle-mounted device (a positioning device and a V2X device).

S103: The target vehicle determines a current driving scenario.

The target vehicle determines, based on the driving trajectory data of the target vehicle and a current real-time map of the target vehicle, whether the current driving scenario of the target vehicle is a city road driving scenario or a highway driving scenario. If the current driving scenario is the city road driving scenario, a city road processing module is enabled. Otherwise, a highway processing module is enabled.

S104: In the city road driving scenario, the target vehicle determines whether an abnormal area exists ahead of the target vehicle.

S105: In the city road driving scenario, the target vehicle identifies a number of vehicles in the abnormal area, location information of each vehicle in the abnormal area, and velocity information of each vehicle in the abnormal area at a moment Ta based on a vehicle trajectory generation algorithm in the city road driving scenario. The moment Ta is a calibration moment in a driving process of the target vehicle.

S106: The target vehicle identifies a number of vehicles in the abnormal area, location information of each vehicle in the abnormal area, and velocity information of each vehicle in the abnormal area at a moment Tb based on the identified number of vehicles in the abnormal area, location information of each vehicle in the abnormal area, and velocity information of each vehicle in the abnormal area at the moment Ta and the vehicle trajectory generation algorithm in the city road driving scenario. The moment Tb is a current moment.

S107: In the highway driving scenario, the target vehicle determines whether an abnormal area exists ahead of the target vehicle.

S108: In the highway driving scenario, the target vehicle identifies a number of vehicles in the abnormal area, location information of each vehicle in the abnormal area, and velocity information of each vehicle in the abnormal area at a moment Ta based on a vehicle trajectory generation algorithm in the highway driving scenario. The moment Ta is a calibration moment in a driving process of the target vehicle.

S109: The target vehicle identifies a number of vehicles in the abnormal area, location information of each vehicle in the abnormal area, and velocity information of each vehicle in the abnormal area at a moment Tb based on the identified number of vehicles in the abnormal area, location information of each vehicle in the abnormal area, and velocity information of each vehicle in the abnormal area at the moment Ta and the vehicle trajectory generation algorithm in the highway driving scenario. The moment Tb is a current moment.

S110: End the identification procedure.

It can be learned from the method 100 that identification of a number and location and velocity information of a vehicle in the abnormal area is mainly first identifying the number of vehicles in the abnormal area, the location information of each vehicle in the abnormal area, and the velocity information of each vehicle in the abnormal area at the moment Ta, and then identifying the number of vehicles in the abnormal area, the location information of each vehicle in the abnormal area, and the velocity information of each vehicle in the abnormal area at the moment Tb based on the identified number of vehicles in the abnormal area, location information of each vehicle in the abnormal area, and velocity information of each vehicle in the abnormal area at the moment Ta and the vehicle trajectory generation algorithm. In the method, a number of vehicles in an abnormal area of an intelligent and connected vehicle queue and location and velocity information of each vehicle in the abnormal area may be identified, so that the abnormal area of the intelligent and connected vehicle queue is restored to order, thereby implementing cooperative control on the intelligent and connected vehicle queue. Therefore, energy consumption and emission of the vehicles can be reduced, and also, traffic congestion can be alleviated, and driving safety and transportation efficiency can be improved.

For clearer understanding of this application, the following describes the moment Ta and the moment Tb in the foregoing method. The moment Ta is the calibration moment in the driving process of the target vehicle, and the moment Tb is the current moment. Assuming that current time is 08:42:50 on April 18, 2020, when CPU processing time is not considered, the moment Tb is 08:42:50 on April 18, 2020, and the moment Ta is a previous moment of the moment Tb. For example, the moment Ta is 08:42:45 on April 18, 2020, 08:42:40 on April 18, 2020, or 08:42:35 on April 18, 2020. The moment Ta is elapsed time of the moment Tb.

In addition, that the moment Ta is a calibration moment in a driving process of the target vehicle means that the moment Ta is a moment determined based on calibration time, that is, the calibration time may be preset based on a driving scenario or another factor, and then Ta may be determined based on the calibration time. For example, in the highway driving scenario, the calibration time is 1s, that is, the current moment is Tb, and Ta is one second earlier than Tb. In the city road driving scenario, the calibration time is 3s, that is, the current moment is Tb, and Ta is three seconds earlier than Tb.

For step S103 in which the target vehicle determines the current driving scenario, the target vehicle needs to determine the current driving scenario of the target vehicle based on the driving trajectory data of the target vehicle and the current real-time map of the target vehicle. The driving trajectory data of the target vehicle includes GPS information, that is, location information, velocity information, and time information of the target vehicle. Location information of a vehicle in a GPS is a longitude and a latitude of a vehicle location. The target vehicle needs to position the target vehicle on the current real-time map of the target vehicle based on the GPS information, to determine the current driving scenario of the target vehicle. The target vehicle selects a vehicle trajectory generation algorithm in the driving scenario of the target vehicle based on the current driving scenario of the target vehicle.

It should be understood that, to achieve higher accuracy, when the target vehicle determines the current driving scenario, the target vehicle may alternatively determine the current driving scenario of the target vehicle based on the driving trajectory data of the target vehicle, the driving trajectory data of the vehicle ahead, and the current real-time map of the target vehicle.

In both step S104 and step 107, the method 100 includes: determining at least one abnormal area included ahead of the target vehicle at the moment Tb.

Optionally, the determining at least one abnormal area included ahead of the target vehicle at the moment Tb includes: obtaining real driving trajectories of a plurality of intelligent and connected vehicles ahead of the target vehicle from a moment Tc to the moment Tb, where the moment Tc is a calibration moment in the historical driving process of the target vehicle; calculating theoretical driving trajectories of the plurality of intelligent and connected vehicles ahead of the target vehicle from the moment Tc to the moment Tb; calculating a difference between a theoretical driving trajectory and a real driving trajectory of each of the plurality of intelligent and connected vehicles; and determining, based on the difference between the theoretical driving trajectory and the real driving trajectory of each intelligent and connected vehicle and a first threshold, the at least one abnormal area included ahead of the target vehicle at the moment Tb.

For clearer understanding of this application, the following first describes the moment Tc in the foregoing method. The moment Tc is a calibration moment in the historical driving process of the target vehicle, and the moment Tb is the current moment. Assuming that current time is 08:41:50 on April 18, 2020, when CPU processing time is not considered, the moment Tb is 08:41:50 on April 18, 2020, and the moment Tc is a previous moment of the moment Tb. For example, the moment Tc is 08:41:45 on April 18, 2020, 08:41:40 on April 18, 2020, or 08:41:35 on April 18, 2020. The moment Tc is elapsed time of the moment Tb.

In addition, that the moment Tc is a calibration moment in the driving process of the target vehicle means that the moment Tc is a moment determined based on calibration time, that is, the calibration time may be preset based on a driving scenario or another factor, and then Tc may be determined based on the calibration time. For example, in the highway driving scenario, the calibration time is 1s, that is, the current moment is Tb, and Tc is one second earlier than Tb. In the city road driving scenario, the calibration time is 3s, that is, the current moment is Tb, and Tc is three seconds earlier than Tb.

It should be understood that the moment Tc may be the same as or different from the moment Ta. For example, in the highway scenario, the calibration time for determining the at least one abnormal area included ahead of the target vehicle at the moment Tb is 3s, that is, the current moment is Tb, and Tc is three seconds earlier than Tb; and the calibration time for identifying a parameter of an abnormal vehicle in a vehicle queue is 2s, that is, the current moment is Tb, and Ta is two seconds earlier than Tb.

Specifically, it is assumed that the intelligent and connected vehicle queue includes seven vehicles P1 to P7, and P7 is the target vehicle. P7 receives real vehicle driving trajectories and theoretical vehicle driving trajectories of P2 to P6 that are separately sent by P2 to P6. The theoretical vehicle driving trajectories of P2 to P6 are successively calculated. P2 calculates a theoretical trajectory curve of P2 based on a vehicle-following model and a real trajectory curve of P1 between Tc and Tb. P3 calculates a theoretical trajectory curve of P3 based on the vehicle-following model and a real trajectory curve of P2 between Tc and Tb. P4 calculates a theoretical trajectory curve of P4 based on the vehicle-following model and a real trajectory curve of P3 between Tc and Tb. P5 calculates a theoretical trajectory curve of P5 based on the vehicle-following model and a real trajectory curve of P4 between Tc and Tb. P6 calculates a theoretical trajectory curve of P6 based on the vehicle-following model and a real trajectory curve of P5 between Tc and Tb.

It should be understood that alternatively, the theoretical vehicle driving trajectories of P2 to P6 may be successively calculated based on a vehicle trajectory generation algorithm.

P7 determines, by separately comparing the real driving trajectories of the vehicles P2 to P6 and the theoretical driving trajectories of the vehicles P2 to P6, the at least one abnormal area included ahead of the vehicle P7.

If

$$|LP2,Cal - LP2,Real| \leq \text{first threshold};$$

$$|LP3,Cal - LP3,Real| \leq \text{first threshold};$$

$$|LP4,Cal - LP4,Real| \leq \text{first threshold};$$

$$|LP5,Cal - LP5,Real| \leq \text{first threshold};$$

and

$$|LP6,Cal - LP6,Real| \leq \text{first threshold},$$

where
LPX,Cal represents a theoretical location point of a vehicle X at the moment Tb, and LPX,Real represents a real location point of the vehicle X, it indicates that there is no unknown area between P1 and P2, P2 and P3, P3 and P4, P4 and P5, and P5 and P6, that is, no abnormal area is included ahead of the vehicle P7.

If

$$|LP2,Cal - LP2,Real| \leq \text{first threshold};$$

$$|LP3,Cal - LP3,Real| \leq \text{first threshold};$$

$$|LP4,Cal - LP4,Real| > \text{first threshold};$$

$$|LP5,Cal - LP5,Real| \leq \text{first threshold};$$

and

$$|LP6,Cal - LP6,Real| > \text{first threshold},$$

where
LPX,Cal represents a theoretical location point of a vehicle X at the moment Tb, and LPX,Real represents a real location point of the vehicle X, it indicates that no unknown area exists between P1 and P2, P2 and P3, and P4 and P5, and abnormal areas appear between P3 and P4 and between P5 and P6 because non-intelligent and connected vehicles may drive between P3 and P4 and between P5 and P6, that is, two abnormal areas are included ahead of the vehicle P7.

If

$$|LP2,Cal - LP2,Real| \leq \text{first threshold};$$

$$|LP3,Cal - LP3,Real| \leq \text{first threshold};$$

$$|LP4,Cal - LP4,Real| \leq \text{first threshold};$$

$$|LP5,Cal - LP5,Real| \leq \text{first threshold};$$

and

$$|LP6,Cal - LP6,Real| > \text{first threshold},$$

where
LPX,Cal represents a theoretical location point of a vehicle X at the moment Tb, and LPX,Real represents a real location point of the vehicle X, it indicates that no unknown area exists between P1 and P2, P2 and P3, P3 and P4, and P4 and P5, and an abnormal area appears between P5 and P6 because a non-intelligent and connected vehicle may drive between P5 and P6, that is, one abnormal area is included ahead of the vehicle P7.

It should be understood that a driving trajectory of a vehicle usually includes location information and velocity information. In the foregoing descriptions, it is determined, based on the location information of the vehicle, whether an abnormal area appears ahead of the target vehicle. It may be alternatively determined, based on the velocity information of the vehicle, whether an abnormal area appears ahead of the target vehicle, that is, determining may be performed by comparing theoretical velocities and real velocities of a plurality of vehicles.

Optionally, the determining at least one abnormal area included ahead of the target vehicle at the moment Tb includes: obtaining real driving trajectories of a plurality of intelligent and connected vehicles ahead of the target vehicle from a moment Tc to the moment Tb, and determining, based on the obtained real driving trajectories of the plurality of intelligent and connected vehicles ahead of the target vehicle from the moment Tc to the moment Tb, the at least one abnormal area included ahead of the target vehicle at the moment Tb.

Specifically, it is assumed that the intelligent and connected vehicle queue includes seven vehicles P1 to P7, and P7 is the target vehicle. During driving, P5 changes from an intelligent and connected vehicle to a non-intelligent and connected vehicle because of a vehicle communication fault, and P7 cannot receive a real vehicle driving trajectory and a theoretical vehicle driving trajectory that are sent by P5, and therefore P7 determines that P5 is abnormal, in other words, an abnormal area appears between P4 and P6.

Optionally, the determining at least one abnormal area included ahead of the target vehicle at the moment Tb includes:

obtaining real driving trajectories of a plurality of intelligent and connected vehicles ahead of the target vehicle from a moment Tc to the moment Tb; calculating theoretical driving trajectories of the plurality of intelligent and connected vehicles ahead of the target vehicle from the moment Tc to the moment Tb; calculating a difference between a theoretical driving trajectory and a real driving trajectory of each of the plurality of intelligent and connected vehicles; and determining, based on the difference between the theoretical driving trajectory and the real driving trajectory of each intelligent and connected vehicle, a first threshold, and the obtained real driving trajectories of the plurality of intelligent and connected vehicles ahead of the target vehicle from the moment Tc to the moment Tb, the at least one abnormal area included ahead of the target vehicle at the moment Tb.

Specifically, it is assumed that the intelligent and connected vehicle queue includes seven vehicles P1 to P7, and P7 is the target vehicle. During driving, P5 changes from an intelligent and connected vehicle to a non-intelligent and connected vehicle because of a vehicle communication fault, P7 cannot receive a real vehicle driving trajectory and a theoretical vehicle driving trajectory that are sent by P5, and P7 can receive information from an intelligent and connected vehicle other than P5.

If

$$|LP2,Cal - LP2,Real| \leq \text{first threshold};$$

$$|LP3,Cal - LP3,Real| > \text{first threshold};$$

$$|LP4,Cal - LP4,Real| \leq \text{first threshold};$$

and

$$|LP6,Cal - LP6,Real| > \text{first threshold},$$

where

LPX,Cal represents a theoretical location point of a vehicle X at the moment Tb, and LPX,Real represents a real location point of the vehicle X, it indicates that no unknown area exists between P1 and P2 and between P3 and P4, and abnormal areas appear between P2 and P3 and between P4 and P6 because a non-intelligent and connected vehicle may drive between P2 and P3, and P5 between P4 and P6 is faulty, or a non-intelligent and connected vehicle may drive between P4 and P6.

It should be understood that the first threshold is a preset value, and may be an empirical value or the like.

In the foregoing case, the intelligent and connected vehicle queue includes seven vehicles P1 to P7, and P7 is the target vehicle. During driving, P5 changes from an intelligent and connected vehicle to a non-intelligent and connected vehicle because of a vehicle communication fault, P7 cannot receive a real vehicle driving trajectory and a theoretical vehicle driving trajectory that are sent by P5, and P7 can receive information from an intelligent and connected vehicle other than P5. Therefore, P7 can directly determine, based on information loss of P5, that an exception occurs between P4 and P6.

For example, past time is 10:08:23, May 17, 2020. At this moment, all vehicles are intelligent and connected vehicles, and the target vehicle P7 can obtain ID information, velocity and location information, and the like of each of the vehicles P1 to P6.

At 10:09:23 on May 17, 2020, a fault occurs on P5, and P5 changes from a non-intelligent network and connected vehicle to a common vehicle. In this case, the target vehicle P7 can obtain ID information, velocity and location information, and the like of each of the vehicles P1 to P4 and P6. ID information and the velocity and location information of P5 are missing. The target vehicle can directly determine that an abnormal area appears between P4 and P6.

Because vehicle trajectory generation algorithms are different in different driving scenarios, the following separately describes the vehicle trajectory generation algorithms in the city road driving scenario and the highway driving scenario.

1. Vehicle trajectory generation algorithm in the city road driving scenario

The vehicle trajectory generation algorithm in the city road driving scenario is studied based on two scenarios: There is no vehicle ahead of the target vehicle, and a vehicle exists ahead of the target vehicle. The following separately provides descriptions.

(1) There is no vehicle ahead of the target vehicle:

When there is no vehicle ahead of the target vehicle, there are the following three cases based on types of traffic lights.

a. Study on a vehicle driving rule under a green light

An optimal velocity model (Optimal Velocity Model, OVM) is used. When a velocity of the target vehicle is less than or equal to a current transportation velocity, the target vehicle usually accelerates. An acceleration may be estimated by using Formula (1): the optimal velocity model (Optimal Velocity Model, OVM).

$$\dot{v} = \frac{V - v}{\tau_g} \tag{1},$$

where
v represents the current velocity of the target vehicle, V represents the transportation velocity from an ITS, $\tau_g$ represents adaptive time, and the adaptive time is a calibration quantity, and is estimated by collecting passing time of a vehicle at a traffic light.

b. Study on a vehicle driving rule under a yellow light

A stop-and-decide model is used for the vehicle driving rule under the yellow light. The stop-and-decide model is shown in Formula (2). When a traffic light changes from green to yellow, a driver of the target vehicle needs to decide whether to pass through a traffic light intersection without stopping or stop and wait for a next green light at the intersection.

$$\begin{cases} v \geq \frac{d_{veh,d}}{\tau_y} & \text{Pass} \\ v < \frac{d_{veh,d}}{\tau_y} & \text{Stop} \end{cases} \tag{2},$$

where
$\tau_y$ represents duration of the current yellow light, and $d_{veh,d}$ represents a distance between the current vehicle and the traffic light ahead.

c. Study on a vehicle driving rule under a red light

Vehicle-following model under the red light (a traffic light is assumed to be a stationary vehicle of L = 0): When a state of the traffic light is red, the traffic light may be assumed to be a stationary vehicle whose vehicle length is ignored. When the state of the traffic light changes from red to green, the stationary vehicle immediately disappears. In this application, an intelligent driver model (Intelligent Driver Model, IDM) proposed by Martin Triber is used. The IDM uses a time headway, a velocity difference between adjacent vehicles, and a velocity of a vehicle behind as input of the model. A specific definition is described in Formula (3).

$$a_f(t) = a_{f,max} \left[ 1 - \left( \frac{v_f(t)}{v_{des}} \right)^\delta - \left( \frac{g_{des}(v_f, v_l, t)}{g_f(t)} \right)^2 \right]$$

$$g_{des}(v_f, v_l, t) = g_0 + \max\left\{v_f \cdot \Gamma + \frac{v_f(t)(v_l(t) - v_f(t))}{2\sqrt{a_{f,max} \cdot dec_{f,max}}}, 0\right\} \tag{3},$$

where

$$g_f(t) = s_l(t) - s_f(t) - l_{veh}$$

$$v_f(t+1) = \max\{\min\{v_f(t) + a_f(t) \cdot T_s, v_{des}\}, 0\}$$

$a_{f,max}$ represents a maximum acceleration of the target vehicle, $v_{des}$ represents a desired velocity of the target vehicle, $v_f$ represents a velocity of the target vehicle, $v_l$ represents a velocity of a vehicle ahead, $s_f$ represents mileage of the target vehicle, $s_l$ represents mileage of the vehicle ahead, $l_{veh}$ represents a vehicle length (a length in vehicle length statistics, for example, a small-vehicle length or a large-vehicle length), $g_f$ represents a gap between the vehicle ahead and the target vehicle, $\delta$ represents an acceleration adjustment coefficient, $g_0$ represents a minimum gap between the vehicle ahead and the target vehicle, $\Gamma$ represents a safety time gap of the vehicle, and $dec_{f,max}$ represents a maximum deceleration of the target vehicle.

It should be understood that the vehicle-following model named the IDM used in this embodiment of this application is merely an example, and does not constitute any limitation on this application. The vehicle-following model may be another vehicle-following model such as a general model (GM), a linear vehicle-following model, a physiological-psychological vehicle-following model, or a safety distance model.

(2) A vehicle exists ahead of the target vehicle:

In this driving scenario, a driving behavior of the target vehicle is not only affected by a vehicle ahead, but also affected by a traffic light. The traffic light usually has relatively large impact on vehicles that are relatively close to a traffic light intersection. Therefore, the case in which a vehicle exists ahead of the target vehicle may be discussed in two cases.

a. Analysis on a vehicle-following behavior during normal driving

In this embodiment of this application, an intelligent driver model (Intelligent Driver Model, IDM) proposed by Martin Triber is used to describe a vehicle-following behavior during normal driving. The IDM uses a time headway, a velocity difference between adjacent vehicles, and a velocity of the target vehicle as input of the model. A specific definition is described in Formula (4).

$$a_f(t) = a_{f,max}\left[1 - \left(\frac{v_f(t)}{v_{des}}\right)^\delta - \left(\frac{g_{des}(v_f, v_l, t)}{g_f(t)}\right)^2\right]$$

$$g_{des}(v_f, v_l, t) = g_0 + \max\left\{v_f \cdot \Gamma + \frac{v_f(t)(v_l(t) - v_f(t))}{2\sqrt{a_{f,max} \cdot dec_{f,max}}}, 0\right\} \tag{4},$$

where

$$g_f(t) = s_l(t) - s_f(t) - l_{veh}$$

$$v_f(t+1) = \max\{\min\{v_f(t) + a_f(t) \cdot T_s, v_{des}\}, 0\}$$

$a_{f,max}$ represents a maximum acceleration of the target vehicle, $v_{des}$ represents a desired velocity of the target vehicle, $v_f$ represents the velocity of the target vehicle, $v_l$ represents a velocity of a vehicle ahead, $s_f$ represents mileage of the target vehicle, $s_l$ represents mileage of the vehicle ahead, $l_{veh}$ represents a vehicle length (a length in vehicle length statistics, for example, a small-vehicle length or a large-vehicle length), $g_f$ represents a gap between the vehicle ahead and the target vehicle, $\delta$ represents an acceleration adjustment coefficient, $g_0$ represents a minimum gap between the vehicle ahead and the target vehicle, $\Gamma$ represents a safety time gap of the vehicle, and $dec_{f,max}$ represents a maximum deceleration of the target vehicle.

b. Analysis on a stop queuing behavior and a startup shock wave behavior of the vehicle ahead of the traffic light intersection

Due to periodic impact of the traffic light, a stop queuing phenomenon and a startup shock wave phenomenon of vehicles often occur at the traffic light intersection. The stop queuing behavior and the startup shock wave behavior mainly mean that a driver has reaction time at this moment. The reaction time of the driver affects the vehicle trajectory generation algorithm.

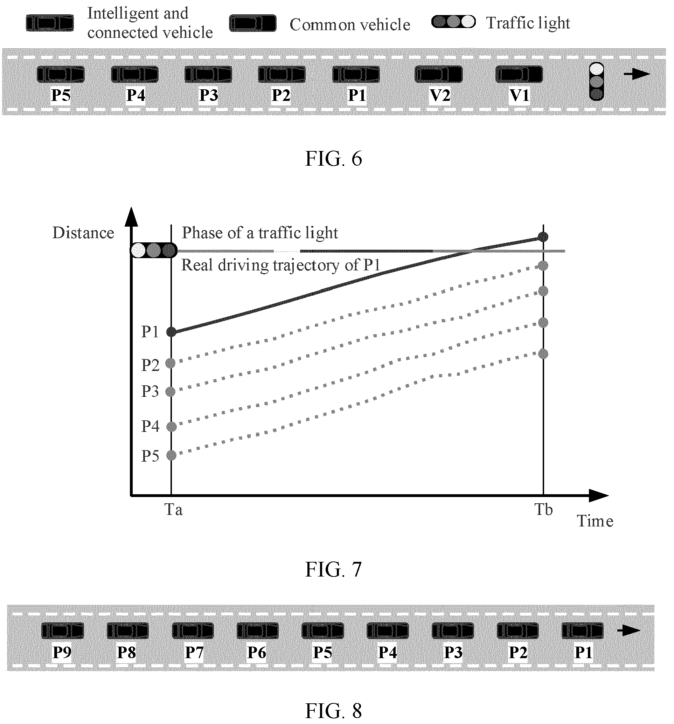

For ease of describing a principle of the city-road vehicle trajectory generation algorithm, FIG. 6 and FIG. 7 are used for description.

FIG. 6 is a schematic diagram of driving of an intelligent and connected vehicle queue on a city road. P1, P2, P3, P4, and P5 are an intelligent and connected vehicle queue, and each vehicle has a V2X function. V1 and V2 are common vehicles, and neither of V1 and V2 has the V2X function. FIG. 7 is a schematic diagram of a city-road vehicle trajectory generation algorithm. Provided that a real driving trajectory of the vehicle P1 in a time period from Ta to Tb, location information and velocity information of P2, P3, P4, and P5 at the moment Ta, and phase information of a traffic light ahead are known, theoretical driving trajectories of P2, P3, P4, and P5 can be generated one by one based on the foregoing city-road vehicle driving rules. That is, a theoretical trajectory generation algorithm of P2 is generated based on the real driving trajectory of P1 and the vehicle trajectory generation algorithm, a theoretical trajectory generation algorithm of P3 is generated based on the theoretical driving trajectory of P2 and the vehicle trajectory generation algorithm, a theoretical trajectory generation algorithm of P4 is generated based on the theoretical driving trajectory of P3 and the vehicle trajectory generation algorithm, a theoretical trajectory generation algorithm of P5 is generated based on the theoretical driving trajectory of P4 and the vehicle trajectory generation algorithm, so that the theoretical driving trajectories of P2, P3, P4, and P5 are successively generated, as shown in dashed lines in FIG. 6.

2. Vehicle trajectory generation algorithm in the highway driving scenario

In comparison with a city road, the highway vehicle trajectory generation algorithm is simpler because there is no periodic impact of a traffic light. An intelligent driver model (Intelligent Driver Model, IDM) proposed by Martin Triber may be used to describe a vehicle-following behavior during normal driving. The IDM uses a time headway, a velocity difference between adjacent vehicles, and a velocity of a vehicle behind as input of the model. A specific definition is described in Formula (5).

$$a_f(t) = a_{f,max}\left[1 - \left(\frac{v_f(t)}{v_{des}}\right)^{\delta} - \left(\frac{g_{des}(v_f, v_l, t)}{g_f(t)}\right)^2\right]$$

$$g_{des}(v_f, v_l, t) = g_0 + max\left\{v_f \cdot \varGamma + \frac{v_f(t)(v_l(t) - v_f(t))}{2\sqrt{a_{f,max} \cdot dec_{f,max}}}, 0\right\} \tag{5},$$

where

$$g_f(t) = s_l(t) - s_f(t) - l_{veh}$$

$$v_f(t+1) = max\{min\{v_f(t) + a_f(t) \cdot T_s, v_{des}\}, 0\}$$

$a_{f,max}$ represents a maximum acceleration of the vehicle behind, $v_{des}$ represents a desired velocity of the vehicle behind, $v_f$ represents the velocity of the vehicle behind, $v_l$ represents a velocity of a vehicle ahead, $s_f$ represents mileage of the vehicle behind, $s_l$ represents mileage of the vehicle ahead, $l_{veh}$ represents a vehicle length, $g_f$ represents a gap between adjacent vehicles, $\delta$ represents an acceleration adjustment coefficient, $g_0$ represents a minimum gap between adjacent vehicles, $\varGamma$ represents a safety time gap of the vehicle, and $dec_{f,max}$ represents a maximum deceleration of the vehicle behind.

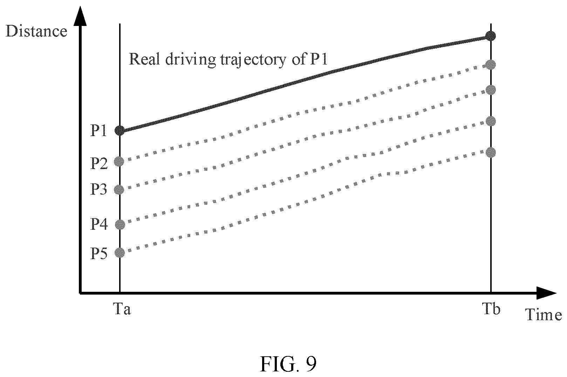

For ease of describing a principle of the highway vehicle trajectory generation algorithm, FIG. 8 and FIG. 9 are used for description.

FIG. 8 is a schematic diagram of driving of an intelligent and connected vehicle queue in a time period from Ta to Tb. FIG. 9 is a schematic diagram of a highway vehicle trajectory generation algorithm. Provided that a driving trajectory of the vehicle P1 in the time period from Ta to Tb and location and velocity information of P2, P3, P4, and P5 at the moment Ta are known, theoretical driving trajectories of P2, P3, P4, and P5 in the time period from Ta to Tb can be successively generated one by one based on the vehicle trajectory generation algorithm (the vehicle-following model named the IDM in the highway driving scenario).

It can be learned from the foregoing content that a theoretical driving trajectory of each vehicle in the abnormal area in the time period from Ta to Tb can be learned based on the vehicle trajectory generation algorithm if a driving trajectory of the target vehicle in the time period from Ta to Tb and the number of vehicles in the abnormal area, the location information of each vehicle in the abnormal area, and the velocity information of each vehicle in the abnormal area at the moment Ta are learned. However, the number of vehicles in the abnormal area, location information of the vehicles, and velocity information of the vehicles at the moment Ta are unknown to the target vehicle. Therefore, the number of vehicles in the abnormal area, the location information of the vehicles, and the velocity information of the vehicles at the moment Ta need to be identified.

The following specifically describes an abnormal area parameter identification algorithm, that is, how to identify the number of vehicles in the abnormal area, the location information of each vehicle in the abnormal area, and the velocity information of each vehicle in the abnormal area at the moment Ta in step S105 and step S108.

The abnormal area parameter identification algorithm mainly includes the following three steps.

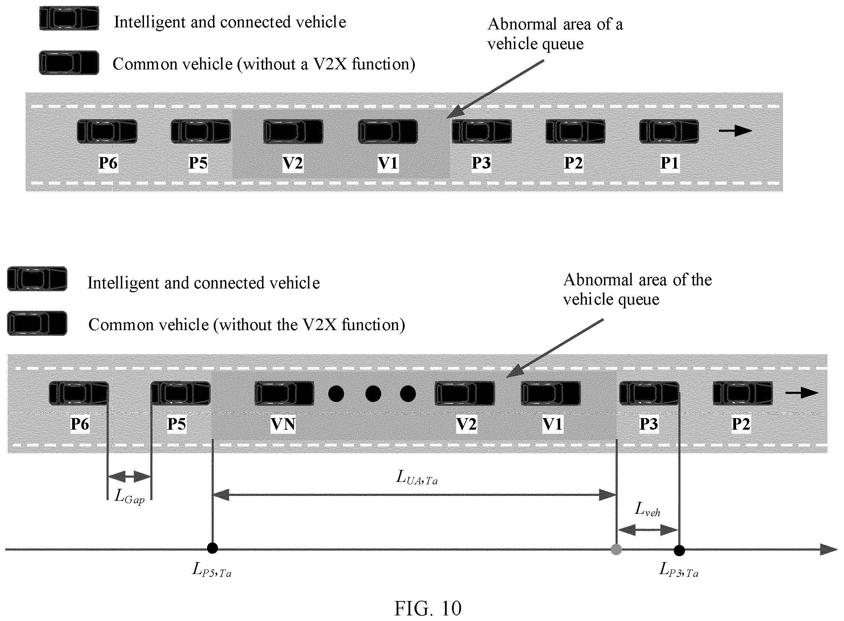

1. Calculate a maximum number N of vehicles in the abnormal area at the moment Ta according to Formula (6). As shown in FIG. 10, P5 is used as an example for description. A vehicle queue ahead of P5 is abnormal, and an area between P3 and P5 is an abnormal area of the queue.

$$N = \left\lfloor \frac{L_{UA,T_a}}{L_{veh}+L_{Gap}} \right\rfloor \tag{6},$$

where

$L_{veh}$ is an average vehicle length, $L_{Gap}$ represents a minimum gap between two adjacent vehicles, and $L_{UA,T_a}$ represents a length of the abnormal area at the moment $T_a$, and may be calculated according to Formula (7).

$$L_{UA,T_a} = L_{P_3,T_a} - L_{P_5,T_a} \tag{7},$$

where
$L_{P_3,T_a}$ represents a location of the intelligent and connected vehicle P3, and $L_{P_5,T_a}$ represents a location of the intelligent and connected vehicle P5.

2. Calculate a root mean square error (Root Mean Square Error, RMSE) between a theoretical driving trajectory and a real driving trajectory of the target vehicle when the number of vehicles in the abnormal area is K, where K∈{1, ... , N}.

When the root mean square error RMSE between the theoretical driving trajectory and the real driving trajectory of the target vehicle is calculated, a machine learning algorithm (for example, a genetic algorithm) may be used to find the RMSE when the number of vehicles in the abnormal area is K (K ∈ {1, ..., N}).

It is assumed that a number of vehicles in the abnormal area at the moment $T_a$ is K (where K is a random number). Location information and velocity information of each vehicle in the abnormal area at the moment $T_a$ are randomly generated. Then vehicle driving trajectories of the vehicles from the moment $T_a$ to the moment $T_b$ may be successively generated one by one based on the vehicle trajectory generation algorithm and location and velocity information (where the location and velocity information of the $i^{th}$ (i∈ {1, ..., K}) vehicle are determined based on location and velocity information of the $(i-1)^{th}$ vehicle) of the $i^{th}$ vehicle. Then the theoretical trajectory $\hat{V}_B = [\hat{v}_{B,T_a}, ... , \hat{v}_{B,T_b}]$ of the vehicle P5 (namely, the target vehicle) from $T_a$ to $T_b$ is calculated based on theoretical trajectory information of the $K^{th}$ vehicle and the vehicle trajectory generation algorithm. Then the root mean square error $RMSE_{Num=K,T_a}$ between the real trajectory VB = $[v_{B,Ta}, ... , v_{B,T_b}]$ and the theoretical trajectory $\hat{V}_B = [\hat{v}_{B,T_a}, ... , \hat{v}_{B,T_b}]$ of the vehicle P5 from $T_a$ to $T_b$ is calculated based on the real trajectory and the theoretical trajectory of the vehicle P5 from $T_a$ to $T_b$ according to Formula (8). When the number of vehicles in the abnormal area is K, a number of iterations may be set to M. M is a number of times of randomly generating location information and velocity information of each vehicle in the abnormal area at the moment $T_a$. For example, if M is 50, 50 pairs of location information and velocity information of each vehicle in the abnormal area at the moment $T_a$ are randomly generated. Location and velocity information of each vehicle at the moment $T_a$ that can make $RMSE_{Num=K,T_a}$ attain a smallest value in a plurality of RMSEs may be determined by using the machine learning algorithm.

$$RMSE_{Num=K,T_a} = \sqrt{\frac{1}{n}\sum_{j=1}^{n}\left(v_{P_5,j} - \hat{v}_{P_5,j}\right)^2} \tag{8},$$

where

n represents a data length.

It should be understood that the determining the location and velocity information of each vehicle in the abnormal area at the moment $T_a$ that can make $RMSE_{Num=K,T_a}$ attain the smallest value is merely one method for determining the location information and the velocity information of each vehicle in the abnormal area when the number of vehicles in the abnormal area is $K$. Alternatively, when the number of vehicles in the abnormal area is $K$, the location information and the velocity information of each vehicle in the abnormal area may be determined when the RMSE meets a first condition. The first condition may be that $RMSE_{Num=K,T_a}$ attains the smallest value, or the first condition may be randomly selecting $RMSE_{Num=K,T_a}$ when $RMSE_{Num=K,T_a}$ meets a specific range, to determine the location information and the velocity information of each vehicle in the abnormal area. For example, the range is the first five RMSEs, and RMSEs are arranged in ascending order.

3. Determine location information and velocity information of each vehicle in the abnormal area when the number of vehicles in the abnormal area is K and the RMSE is the smallest, where values of 1 to N are traversed for K; and calculate a number of vehicles that makes the RMSE the smallest in the abnormal area at the moment Ta according to Formula (9), and obtain location and velocity information of each vehicle in a case of the number of vehicles.

$$RMSE = min_{Num \in \{0,1,...,N\}} \left( \begin{bmatrix} RMSE_{Num=0,T_a}, \\ ..., \\ RMSE_{Num=K,T_a}, \\ ..., \\ RMSE_{Num=N,T_a} \end{bmatrix} \right) \tag{9}$$

It should be understood that the calculating the number of vehicles that makes the RMSE the smallest in the abnormal area at the moment Ta is merely one method for determining the number of vehicles. Alternatively, when the number of vehicles in the abnormal area is K, and the RMSE meets a second condition, the number of vehicles may be determined. The second condition may be that $RMSE_{Num=K,T_a}$ attains the smallest value, or the second condition may be randomly selecting $RMSE_{Num=K,T_a}$ when $RMSE_{Num=K,T_a}$ meets a specific range. For example, the range is the first five RMSEs, and RMSEs are arranged in ascending order.

Through the following three steps, the number of vehicles in the abnormal area ahead of P5, the location information of each vehicle in the abnormal area, and the velocity information of each vehicle in the abnormal area at the moment Ta may be identified.

After the number of vehicles in the abnormal area of the vehicle queue and the location and velocity information of the vehicles at the moment Ta are identified, the vehicle trajectory generation algorithm is used again to obtain location and velocity information of each vehicle in the abnormal area of the vehicle queue at the moment Tb.

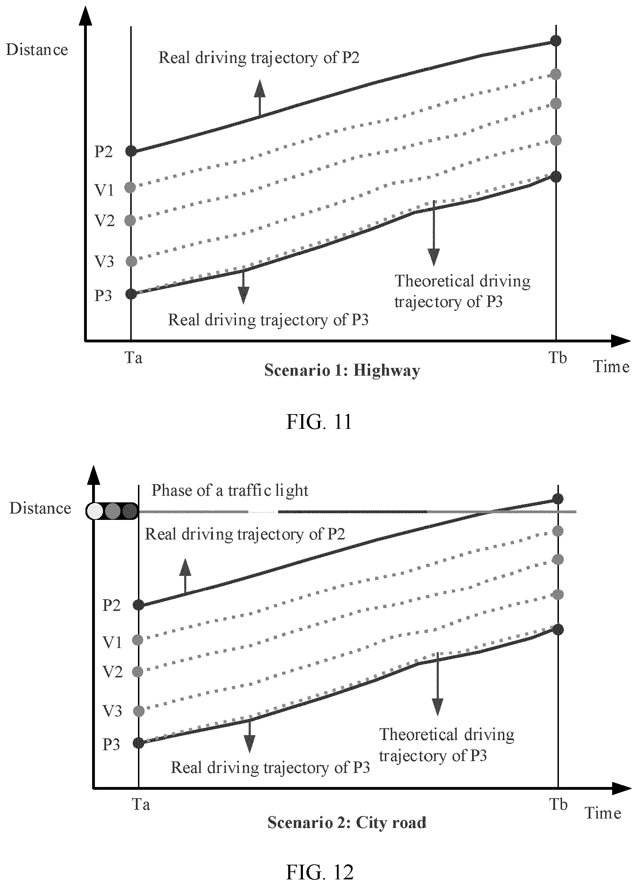

FIG. 11 is a schematic diagram of obtaining a number of vehicles in an abnormal area and location and velocity information of the vehicles at a moment Tb on a highway based on a result of identification at a moment Ta.

FIG. 12 is a schematic diagram of obtaining a number of vehicles in an abnormal area and location and velocity information of the vehicles at a moment Tb on a city road based on a result of identification at a moment Ta.

Because environments of the highway driving scenario and the city road driving scenario are different, vehicle configuration requirements for applying the method 100 in different driving scenarios are different. For clearer understanding of this application, the following describes configuration requirements of the target vehicle in different driving scenarios.

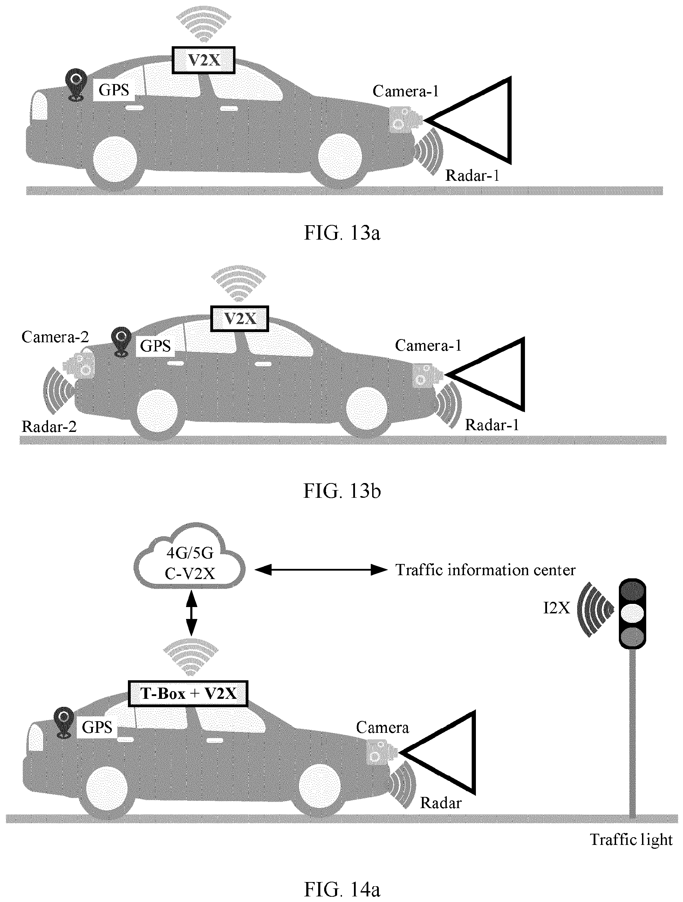

In the highway driving scenario, the ICV needs to be equipped with a GPS positioning device, configured to obtain location information and velocity information of the vehicle; a V2X device for obtaining location information and velocity information of other intelligent and connected vehicles in the intelligent and connected vehicle queue and sending the location information and the velocity information of the ICV to the other intelligent and connected vehicles; and a radar and/or a camera for perceiving location information and velocity information of a vehicle ahead. It should be understood that the radar and/or the camera may be configured in a front part and/or a rear part of the vehicle. FIG. 13a and FIG. 13b are schematic diagrams of configuration of an ICV in a highway driving scenario.

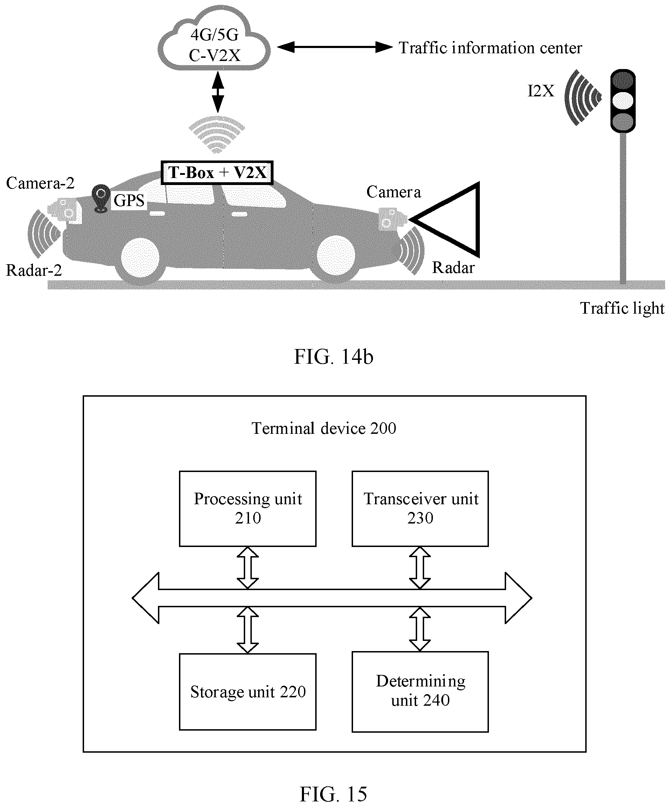

In the city road driving scenario, the ICV needs to be equipped with a GPS positioning device for obtaining location and velocity information of the vehicle; a V2X device for obtaining location and velocity information of other intelligent and connected vehicles in a vehicle queue, sending the location and velocity information of the vehicle to the other intelligent and connected vehicles, and receiving phase information of a traffic light ahead; and a radar or a camera for perceiving location and velocity information of a vehicle ahead; a telematics box (Telematics Box, T-Box) T-Box for receiving current road transportation velocity information sent by a transportation information center. The radar and/or the camera may be configured in a front part and/or a rear part of the vehicle. In addition, in the city road driving scenario, a traffic light on a road affects a vehicle driving trajectory. Therefore, in the city road driving scenario, the traffic light needs to have an infrastructure to everything (Infrastructure to Everything, I2X) function. FIG. 14a and FIG. 14b are schematic diagrams of configuration of an ICV in a city road driving scenario.

Optionally, when a radar or a camera is configured in a front part of each intelligent and connected vehicle in the intelligent and connected vehicle queue, a distance of each of the at least one abnormal area is from the first intelligent and connected vehicle adjacent to the start of each abnormal area to the end of each abnormal area.

Optionally, when radars or cameras are configured in both a front part and a rear part of the intelligent and connected vehicle, a distance of each of the at least one abnormal area is an area between an adjacent vehicle behind the first intelligent and connected vehicle adjacent to the start of each abnormal area and a vehicle ahead that is adjacent to the end of each abnormal area.

When radars or cameras are configured in both a front part and a rear part of a vehicle in the vehicle queue of the intelligent and connected vehicle, a length of the abnormal area of the vehicle queue becomes shorter, so that identification accuracy is improved.

With reference to FIG. 1 to FIG. 14, the foregoing describes in detail the method for identifying an abnormal-vehicle parameter based on network information during vehicle queue driving that is provided in embodiments of this application. The following describes in detail a communication apparatus in embodiments of this application with reference to FIG. 15.

FIG. 15 is a schematic block diagram of a terminal device 200 according to an embodiment of this application.

In some embodiments, the terminal device 200 may be an access network device, or may be a chip or a circuit, for example, a chip or a circuit that may be disposed in an access network device.

In some embodiments, the terminal device 200 may be a vehicle-mounted terminal device, or may be a chip or a circuit, for example, a chip or a circuit that may be disposed in a core network device.

In some embodiments, the terminal device 200 may be a server, or may be a chip or a circuit, for example, a chip or a circuit that may be disposed in a server. The server may be independent of a vehicle, and communicate with a target vehicle by using a transceiver of the server to perform data transmission. For example, the target vehicle sends collected data to the server, and the server performs calculation processing, and sends a result to the target vehicle.

In a possible manner, the terminal device 200 may include a processing unit 210 (that is, an example of a processor) and a transceiver unit 230. In some possible implementations, the processing unit 210 may be further referred to as a determining unit. In some possible implementations, the transceiver unit 230 may include a receiving unit and a sending unit.

In an implementation, the transceiver unit 230 may be implemented by using a transceiver or a transceiver-related circuit or interface circuit.

In an implementation, the terminal device may further include a storage unit 220. In a possible manner, the storage unit 220 is configured to store instructions. In an implementation, the storage unit may also be configured to store data or information. The storage unit 220 may be implemented by using a memory.

In some possible designs, the processing unit 210 is configured to execute the instructions stored in the storage unit 220, so that the terminal device 200 implements steps performed by the terminal device in the foregoing method. Alternatively, the processing unit 210 may be configured to invoke the data in the storage unit 220, so that the terminal device 200 implements steps performed by the terminal device in the foregoing method.

In some possible designs, the processing unit 210 is configured to execute the instructions stored in the storage unit 220, so that the terminal device 200 implements steps performed by the access network device in the foregoing method. Alternatively, the processing unit 210 may be configured to invoke the data in the storage unit 220, so that the terminal device 200 implements steps performed by the access network device in the foregoing method.

For example, the processing unit 210, the storage unit 220, and the transceiver unit 230 may communicate with each other by using an internal connection channel, and transmit a control signal and/or a data signal. For example, the storage unit 220 is configured to store a computer program, and the processing unit 210 may be configured to invoke the computer program from the storage unit 220 and run the computer program, to control the transceiver unit 230 to receive a signal and/or send a signal and complete steps of the terminal device or the access network device in the foregoing method. The storage unit 220 may be integrated into the processing unit 210, or the storage unit 220 and the processing unit 210 may be separately disposed.

Optionally, if the terminal device 200 is a communication device (for example, a terminal device), the transceiver unit 230 includes a receiver and a transmitter. The receiver and the transmitter may be a same physical entity or different physical entities. When the receiver and the transmitter are a same physical entity, the receiver and the transmitter may be collectively referred to as a transceiver.

Optionally, if the terminal device 200 is a chip or a circuit, the transceiver unit 230 includes an input interface and an output interface.

In an implementation, a function of the transceiver unit 230 may be implemented by using a transceiver circuit or a dedicated transceiver chip. The processing unit 210 may be implemented by using a dedicated processing chip, processing circuit, or processing unit or a universal chip.

In another implementation, the communication device (for example, the terminal device or the access network device) provided in this embodiment of this application may be implemented by using a general-purpose computer. That is, program code for implementing functions of the processing unit 210 and the transceiver unit 230 is stored in the storage unit 220, and the general-purpose processing unit implements the functions of the processing unit 210 and the transceiver unit 230 by executing the code in the storage unit 220.

In an implementation, the terminal device may be applied to a target vehicle, the target vehicle is an intelligent and connected vehicle in an intelligent and connected vehicle queue, the terminal device may further include a determining unit 240, and the determining unit 240 is configured to determine a current driving scenario of the target vehicle based on driving trajectory data of the target vehicle and a current real-time map of the target vehicle. The driving scenario of the target vehicle is a city road driving scenario or a highway driving scenario, and the target vehicle is an intelligent and connected vehicle in the intelligent and connected vehicle queue. The processing unit 210 is configured to select a vehicle trajectory generation algorithm in the current driving scenario of the target vehicle based on the current driving scenario of the target vehicle. The processing unit 210 is further configured to determine at least one abnormal area included ahead of the target vehicle at a moment Tb. The at least one abnormal area is an abnormal area of the intelligent and connected vehicle queue in which the target vehicle is located, and the moment Tb is a current moment. The processing unit 210 is further configured to identify, based on the selected vehicle trajectory generation algorithm and a machine learning algorithm, a number of vehicles in each of the at least one abnormal area and location information and velocity information of each vehicle included in each abnormal area at a moment Ta. The moment Ta is a calibration moment in a historical driving process of the target vehicle. The processing unit 210 is further configured to identify, based on the selected vehicle trajectory generation algorithm and the number of vehicles in each abnormal area and the location information and the velocity information of each vehicle included in each abnormal area at the moment Ta, a number of vehicles in each abnormal area and location information and velocity information of each vehicle included in each abnormal area at the moment Tb.

Optionally, the processing unit 210 is specifically configured to: calculate a root mean square error (Root Mean Square Error, RMSE) between a theoretical driving trajectory and a real driving trajectory of the target vehicle when the number of vehicles in each abnormal area is $K$, where $K \in \{1, ... , N\}$, N is a maximum value N of the number of vehicles included in each abnormal area, and values of 1 to N are traversed for K; obtain location information and velocity information of each vehicle in the abnormal area when the RMSE meets a first condition; and at the moment Ta, determine a number of vehicles and location information and velocity information of each vehicle that correspond to an RMSE meeting a second condition in N determined RMSEs.

Optionally, the processing unit 210 is specifically configured to: obtain real driving trajectories of a plurality of intelligent and connected vehicles ahead of the target vehicle from a moment Tc to the moment Tb, where the moment Tc is a calibration moment in the historical driving process of the target vehicle; calculate theoretical driving trajectories of the plurality of intelligent and connected vehicles ahead of the target vehicle from the moment Tc to the moment Tb; calculate a difference between a theoretical driving trajectory and a real driving trajectory of each of the plurality of intelligent and connected vehicles; and determine, based on the difference between the theoretical driving trajectory and the real driving trajectory of each intelligent and connected vehicle and a first threshold, the at least one abnormal area included ahead of the target vehicle at the moment Tb.

Optionally, when a radar or a camera is configured in a front part of each intelligent and connected vehicle in the intelligent and connected vehicle queue, a distance of each of the at least one abnormal area is from the first intelligent and connected vehicle adjacent to the start of each abnormal area to the end of each abnormal area.

Optionally, when radars or cameras are configured in both a front part and a rear part of the intelligent and connected vehicle, a distance of each of the at least one abnormal area is an area between an adjacent vehicle behind the first intelligent and connected vehicle adjacent to the start of each abnormal area and a vehicle ahead that is adjacent to the end of each abnormal area.

In this case, when radars or cameras are configured in both a front part and a rear part of a vehicle in the vehicle queue of the intelligent and connected vehicle, a length of the abnormal area of the vehicle queue can be shortened, so that identification accuracy is improved.

Optionally, the processing unit 210 is specifically configured to: when the number of vehicles in the abnormal area at the moment Ta is K, randomly generate location information and velocity information of each vehicle in the abnormal area at the moment Ta; calculate a theoretical trajectory of an adjacent vehicle ahead of the target vehicle from the moment Ta to the moment Tb based on the vehicle trajectory generation algorithm; and calculate an RMSE between a real trajectory and the theoretical trajectory of the adjacent vehicle ahead of the target vehicle from Ta to Tb based on the theoretical driving trajectory and the real driving trajectory of the adjacent vehicle ahead of the target vehicle.

Optionally, the processing unit 210 is specifically configured to: determine a length of the abnormal area at the moment Ta; and determine a maximum number N of vehicles in the abnormal area based on the length of the abnormal area, an average vehicle length, and a minimum gap between two adjacent vehicles.

Optionally, the processing unit 210 is further configured to determine vehicle trajectory generation algorithms in different driving scenarios. The vehicle trajectory generation algorithms include a city-road vehicle trajectory generation algorithm and a highway vehicle trajectory generation algorithm.

In the embodiments, claims, and accompanying drawings of the specification of this application, terms such as "first" and "second" are only used for distinguishing and description, but cannot be understood as an indication or implication of relative importance or an indication or implication of a sequence. In addition, the terms "include", "contain", and any other variants thereof are intended to cover a non-exclusive inclusion. For example, a method, a system, a product, or a device including a series of steps or units is not limited to those steps or units that are clearly listed, but may include other steps or units that are not clearly listed or are inherent to such a process, method, product, or device.

It should be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. Through example but not limitative description, many forms of random access memories (random access memories, RAMs) can be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions or computer programs. When the program instructions or the computer programs are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

An embodiment of this application further provides a computer-readable medium. The computer-readable medium stores a computer program, and when the computer program is executed by a computer, steps performed by the terminal device in any one of the foregoing embodiments are implemented.

An embodiment of this application further provides a computer program product. When the computer program product is executed by a computer, steps performed by the terminal device in any one of the foregoing embodiments are implemented.

An embodiment of this application further provides a system chip. The system chip includes a communication unit and a processing unit. The processing unit may be, for example, a processor, and the processor may implement functions of the processing unit and the determining unit in the foregoing embodiment. The communication unit may be, for example, a communication interface, an input/output interface, a pin, or a circuit. The processing unit may execute computer instructions, so that the system chip performs steps performed by the terminal device provided in the foregoing embodiments of this application.

Optionally, the computer instructions are stored in a storage unit.

Embodiments of this application may be used alone or used in combination. This is not limited herein.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, a computer-readable medium may include but is not limited to: a magnetic storage component (for example, a hard disk, a floppy disk, or a magnetic tape), an optical disc (for example, a compact disc (compact disc, CD) or a digital versatile disc (digital versatile disc, DVD)), a smart card and a flash memory component (for example, an erasable programmable read-only memory (erasable programmable read-only memory, EPROM), a card, a stick, or a key drive). In addition, various storage media described in this specification may indicate one or more devices and/or other machine-readable media that are configured to store information. The term "machine-readable media" may include but is not limited to a wireless channel, and various other media that can store, include, and/or carry instructions and/or data.

It should be understood that all table parameters in this application are used only as examples, and do not indicate a specific calculated value, parameter, or the like.

The term "and/or" describes an association relationship for describing associated objects and represents that three relationships may exist. For example, A and/or B may represent the following three cases: Only A exists, both A and B exist, and only B exists. The character "/" usually indicates an "or" relationship between associated objects. "At least one" means one or more. "At least one of A and B" is similar to "A and/or B", is used to describe an association relationship between associated objects, and represents that there may be three relationships. For example, at least one of A and B may represent the following three cases: Only A exists, both A and B exist, and only B exists.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In several embodiments provided in this application, it should be understood that the disclosed system, apparatus, and method may be implemented in another manner. For example, the described apparatus embodiment is merely an example. For example, division into the units is merely logical function division and may be other division in actual implementation. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes: any medium that can store program code, such as a USB flash drive, a removable hard disk, a read-only memory (ROM), a random access memory (Random Access Memory, RAM), a magnetic disk, or an optical disc.

The foregoing descriptions are merely specific implementations of this application, but are not intended to limit the protection scope of this application. Therefore, the protection scope of this application shall be subject to the protection scope of the claims.

**Claims**

1.  A method for identifying a parameter of an abnormal vehicle in a vehicle queue, comprising:

    determining (S103) a current driving scenario of a target vehicle based on driving trajectory data collected by using a vehicle-mounted device of the target vehicle and a current real-time map of the target vehicle, wherein the driving scenario of the target vehicle is a city road driving scenario or a highway driving scenario, and the target vehicle is an intelligent and connected vehicle comprising radars or cameras
    in an intelligent and connected vehicle queue;
    selecting a vehicle trajectory generation algorithm in the current driving scenario of the target vehicle based on the current driving scenario of the target vehicle;
    determining at least one abnormal area comprised ahead of the target vehicle at a moment Tb, wherein the at least one abnormal area is an abnormal area of the intelligent and connected vehicle queue in which the target vehicle is located, and the moment Tb is a current moment;

identifying (S105, S108), based on the selected vehicle trajectory generation algorithm and a machine learning algorithm, a number of vehicles in each of the at least one abnormal area and location information and velocity information of each vehicle comprised in each abnormal area at a moment Ta, wherein the moment Ta is a calibration moment in a historical driving process of the target vehicle; and

identifying (S106, S109), based on the selected vehicle trajectory generation algorithm and the number of vehicles in each abnormal area and the location information and the velocity information of each vehicle comprised in each abnormal area at the moment Ta, a number of vehicles in each abnormal area and location information and velocity information of each vehicle comprised in each abnormal area at the moment Tb, wherein

when a radar or a camera is configured in a front part of each intelligent and connected vehicle in the intelligent and connected vehicle queue, a distance of each of the at least one abnormal area is an area between the first intelligent and connected vehicle adjacent to the start of each abnormal area and a vehicle ahead that is adjacent to the end of each abnormal area; or

when radars or cameras are configured in both a front part and a rear part of the intelligent and connected vehicle, a distance of each of the at least one abnormal area is an area between an adjacent vehicle behind the first intelligent and connected vehicle adjacent to the start of each abnormal area and a vehicle ahead that is adjacent to the end of each abnormal area.

2. The method according to claim 1, wherein the identifying (S105, S108), based on the selected vehicle trajectory generation algorithm and a machine learning algorithm, a number of vehicles in each of the at least one abnormal area and location information and velocity information of each vehicle comprised in each abnormal area at a moment Ta comprises:

calculating a root mean square error RMSE between a theoretical driving trajectory and a real driving trajectory of the target vehicle when the number of vehicles in each abnormal area is $K$, wherein $K \in \{1,\cdots,N\}$, N is a maximum value N of the number of vehicles comprised in each abnormal area, and values of 1 to N are traversed for K;

obtaining location information and velocity information of each vehicle in the abnormal area when the RMSE meets a first condition; and

at a moment Ta, determining a number of vehicles and location information and velocity information of each vehicle that correspond to an RMSE meeting a second condition in N determined RMSEs.

3. The method according to claim 1 or 2, wherein the determining at least one abnormal area comprised ahead of the target vehicle at a moment Tb comprises:

obtaining real driving trajectories of a plurality of intelligent and connected vehicles ahead of the target vehicle from a moment Tc to the moment Tb, wherein the moment Tc is a calibration moment in the historical driving process of the target vehicle;

calculating theoretical driving trajectories of the plurality of intelligent and connected vehicles ahead of the target vehicle from the moment Tc to the moment Tb;

calculating a difference between a theoretical driving trajectory and a real driving trajectory of each of the plurality of intelligent and connected vehicles; and

determining, based on the difference between the theoretical driving trajectory and the real driving trajectory of each intelligent and connected vehicle and a first threshold, the at least one abnormal area comprised ahead of the target vehicle at the moment Tb.

4. The method according to any one of claims 1 to 3, wherein the calculating a root mean square error RMSE between a theoretical driving trajectory and a real driving trajectory of the target vehicle when the number of vehicles in each abnormal area is K comprises:

when the number of vehicles in the abnormal area at the moment Ta is K, randomly generating location information and velocity information of each vehicle in the abnormal area at the moment Ta;

calculating a theoretical trajectory of an adjacent vehicle ahead of the target vehicle from the moment Ta to the moment Tb based on the vehicle trajectory generation algorithm; and

calculating an RMSE between a real trajectory and the theoretical trajectory of the adjacent vehicle ahead of the target vehicle from Ta to Tb based on the theoretical driving trajectory and the real driving trajectory of the adjacent vehicle ahead of the target vehicle.

**5.** The method according to any one of claims 1 to 4, wherein the method further comprises:

determining a length of the abnormal area at the moment Ta; and
determining a maximum number N of vehicles in the abnormal area based on the length of the abnormal area, an average vehicle length, and a minimum gap between two adjacent vehicles.

**6.** The method according to any one of claims 1 to 5, wherein the method further comprises:
determining vehicle trajectory generation algorithms in different driving scenarios, wherein the vehicle trajectory generation algorithms comprise a city-road vehicle trajectory generation algorithm and a highway vehicle trajectory generation algorithm.

**7.** A terminal device (200), comprising:

a determining unit (240), wherein the determining unit (240) is configured to determine a current driving scenario of a target vehicle based on driving trajectory data collected by using a vehicle-mounted device of the target vehicle and a current real-time map of the target vehicle, the driving scenario of the target vehicle is a city road driving scenario or a highway driving scenario, and the target vehicle is an intelligent and connected vehicle comprising radars or cameras in an intelligent and connected vehicle queue; and
a processing unit (210), wherein the processing unit (210) is configured to select a vehicle trajectory generation algorithm in the current driving scenario of the target vehicle based on the current driving scenario of the target vehicle;
the processing unit (210) is further configured to determine at least one abnormal area comprised ahead of the target vehicle at a moment Tb, wherein the at least one abnormal area is an abnormal area of the intelligent and connected vehicle queue in which the target vehicle is located, and the moment Tb is a current moment;
the processing unit (210) is further configured to identify, based on the selected vehicle trajectory generation algorithm and a machine learning algorithm, a number of vehicles in each of the at least one abnormal area and location information and velocity information of each vehicle comprised in each abnormal area at a moment Ta, wherein the moment Ta is a calibration moment in a historical driving process of the target vehicle; and
the processing unit (210) is further configured to identify, based on the selected vehicle trajectory generation algorithm and the number of vehicles in each abnormal area and the location information and the velocity information of each vehicle comprised in each abnormal area at the moment Ta, a number of vehicles in each abnormal area and location information and velocity information of each vehicle comprised in each abnormal area at the moment Tb,
wherein
when a radar or a camera is configured in a front part of each intelligent and connected vehicle in the intelligent and connected vehicle queue, a distance of each of the at least one abnormal area is an area between the first intelligent and connected vehicle adjacent to the start of each abnormal area and a vehicle ahead that is adjacent to the end of each abnormal area; or
when radars or cameras are configured in both a front part and a rear part of each intelligent and connected vehicle in the intelligent and connected vehicle queue, a distance of each of the at least one abnormal area is an area between an adjacent vehicle behind the first intelligent and connected vehicle adjacent to the start of each abnormal area and a vehicle ahead that is adjacent to the end of each abnormal area.

**8.** The terminal device (200) according to claim 7, wherein the processing unit (210) is specifically configured to:

calculate a root mean square error RMSE between a theoretical driving trajectory and a real driving trajectory of the target vehicle when the number of vehicles in each abnormal area is $K$, wherein $K \in \{1,\cdots,N\}$, N is a maximum value N of the number of vehicles comprised in each abnormal area, and values of 1 to N are traversed for K;
obtain location information and velocity information of each vehicle in the abnormal area when the RMSE meets a first condition; and
at a moment Ta, determine a number of vehicles and location information and velocity information of each vehicle that correspond to an RMSE meeting a second condition in N determined RMSEs.

**9.** The terminal device (200) according to claim 7 or 8, wherein the processing unit (210) is specifically configured to:

obtain real driving trajectories of a plurality of intelligent and connected vehicles ahead of the target vehicle from a moment Tc to the moment Tb, wherein the moment Tc is a calibration moment in the historical driving process of the target vehicle;

calculate theoretical driving trajectories of the plurality of intelligent and connected vehicles ahead of the target vehicle from the moment Tc to the moment Tb;

calculate a difference between a theoretical driving trajectory and a real driving trajectory of each of the plurality of intelligent and connected vehicles; and

determine, based on the difference between the theoretical driving trajectory and the real driving trajectory of each intelligent and connected vehicle and a first threshold, the at least one abnormal area comprised ahead of the target vehicle at the moment Tb.

10. A computer-readable storage medium, wherein the computer-readable storage medium stores a computer program, and when the computer program is executed, the method according to any one of claims 1 to 6 is implemented.

11. A chip, comprising a processor and an interface, wherein
the processor is configured to read instructions to perform the method according to any one of claims 1 to 6.

**Patentansprüche**

1. Verfahren zum Identifizieren eines Parameters eines abnormalen Fahrzeugs in einer Fahrzeugschlange, umfassend:

Bestimmen (S103) eines aktuellen Fahrszenarios eines Zielfahrzeugs basierend auf Fahrtrajektoriendaten, die unter Verwendung einer fahrzeugmontierten Vorrichtung des Zielfahrzeugs gesammelt werden, und einer aktuellen Echtzeitkarte des Zielfahrzeugs, wobei das Fahrszenario des Zielfahrzeugs ein Stadtstraßen-Fahrszenario oder ein Autobahn-Fahrszenario ist und das Zielfahrzeug ein intelligentes und verbundenes Fahrzeug ist, das Radare oder Kameras in einer Warteschlange intelligenter und verbundener Fahrzeuge umfasst;

Auswählen eines Algorithmus zur Erzeugung von Fahrzeugtrajektorien in dem aktuellen Fahrszenario des Zielfahrzeugs basierend auf dem aktuellen Fahrszenario des Zielfahrzeugs;

Bestimmen mindestens eines abnormalen Bereichs, der sich zu einem Zeitpunkt Tb vor dem Zielfahrzeug befindet, wobei der mindestens eine abnormale Bereich ein abnormaler Bereich der Warteschlange intelligenter und verbundener Fahrzeuge ist, in welcher sich das Zielfahrzeug befindet, und der Zeitpunkt Tb ein aktueller Zeitpunkt ist;

Identifizieren (S105, S108) einer Anzahl von Fahrzeugen in jedem des mindestens einen abnormalen Bereichs und von Ortsinformationen und Geschwindigkeitsinformationen jedes Fahrzeugs, das sich zu einem Zeitpunkt Ta in jedem abnormalen Bereich befindet, basierend auf dem ausgewählten Algorithmus zur Erzeugung von Fahrzeugtrajektorien und einem Algorithmus für maschinelles Lernen, wobei der Zeitpunkt Ta ein Kalibrierungszeitpunkt in einem historischen Fahrprozess des Zielfahrzeugs ist; und

Identifizieren (S106, S109) einer Anzahl von Fahrzeugen in jedem abnormalen Bereich und von Ortsinformationen sowie Geschwindigkeitsinformationen jedes Fahrzeugs, das sich zu dem Zeitpunkt Tb in jedem abnormalen Bereich befindet, basierend auf dem ausgewählten Algorithmus zur Erzeugung von Fahrzeugtrajektorien und der Anzahl von Fahrzeugen in jedem abnormalen Bereich und den Ortsinformationen sowie den Geschwindigkeitsinformationen jedes Fahrzeugs, das sich zu dem Zeitpunkt Ta in jedem abnormalen Bereich befindet, wobei,

wenn ein Radar oder eine Kamera in einem vorderen Teil jedes intelligenten und verbundenen Fahrzeugs in der Warteschlange intelligenter und verbundener Fahrzeuge konfiguriert ist, ein Abstand jedes des mindestens einen abnormalen Bereichs ein Bereich zwischen dem ersten intelligenten und verbundenen Fahrzeug, das benachbart an dem Anfang jedes abnormalen Bereichs liegt, und einem vorausfahrenden Fahrzeug, das benachbart an dem Ende jedes abnormalen Bereichs liegt, ist; oder

wenn Radare oder Kameras sowohl in einem vorderen Teil als auch in einem hinteren Teil des intelligenten und verbundenen Fahrzeugs konfiguriert sind, ein Abstand jedes des mindestens einen abnormalen Bereichs ein Bereich zwischen einem benachbarten Fahrzeug hinter dem ersten intelligenten und verbundenen Fahrzeug, das benachbart an dem Anfang jedes abnormalen Bereichs liegt, und einem vorausfahrenden Fahrzeug, das benachbart an dem Ende jedes abnormalen Bereichs liegt, ist.

2. Verfahren nach Anspruch 1, wobei das Identifizieren (S105, S108) einer Anzahl von Fahrzeugen in jedem des mindestens einen abnormalen Bereichs und von Ortsinformationen sowie Geschwindigkeitsinformationen jedes Fahrzeugs, das sich zu einem Zeitpunkt Ta in jedem abnormalen Bereich befindet, basierend auf dem ausgewählten Algorithmus zur Erzeugung von Fahrzeugtrajektorien und einem Algorithmus für maschinelles Lernen Folgendes umfasst:

Berechnen eines mittleren quadratischen Fehlers, RMSE, zwischen einer theoretischen Fahrtrajektorie und einer realen Fahrtrajektorie des Zielfahrzeugs, wenn die Anzahl von Fahrzeugen in jedem abnormalen Bereich K ist, wobei K $\in$ {1,$\cdots$, N}, N ein Maximalwert N der Anzahl von Fahrzeugen ist, die sich in jedem abnormalen Bereich befinden, und die Werte von 1 bis N für K durchlaufen werden;

Erlangen von Ortsinformationen und Geschwindigkeitsinformationen jedes Fahrzeugs in dem abnormalen Bereich, wenn der RMSE eine erste Bedingung erfüllt; und

zu einem Zeitpunkt Ta, Bestimmen einer Anzahl von Fahrzeugen und von Ortsinformationen sowie Geschwindigkeitsinformationen jedes Fahrzeugs, die einem RMSE entsprechen, der eine zweite Bedingung in N bestimmten RMSEs erfüllt.

3. Verfahren nach Anspruch 1 oder 2, wobei das Bestimmen mindestens eines abnormalen Bereichs, der sich zu einem Zeitpunkt Tb vor dem Zielfahrzeug befindet, Folgendes umfasst:

Erlangen von realen Fahrtrajektorien einer Vielzahl von intelligenten und verbundenen Fahrzeugen vor dem Zielfahrzeug von einem Zeitpunkt Tc bis zu dem Zeitpunkt Tb, wobei der Zeitpunkt Tc ein Kalibrierungszeitpunkt in dem historischen Fahrprozess des Zielfahrzeugs ist;

Berechnen der theoretischen Fahrtrajektorien der Vielzahl von intelligenten und verbundenen Fahrzeugen vor dem Zielfahrzeug von dem Zeitpunkt Tc bis zu dem Zeitpunkt Tb;

Berechnen einer Differenz zwischen einer theoretischen Fahrtrajektorie und einer realen Fahrtrajektorie von jedem der Vielzahl von intelligenten und verbundenen Fahrzeugen; und

Bestimmen des mindestens einen abnormalen Bereichs, der sich zu dem Zeitpunkt Tb vor dem Zielfahrzeug befindet, basierend auf der Differenz zwischen der theoretischen Fahrtrajektorie und der realen Fahrtrajektorie jedes intelligenten und verbundenen Fahrzeugs und einem ersten Schwellenwert.

4. Verfahren nach einem der Ansprüche 1 bis 3, wobei das Berechnen eines mittleren quadratischen Fehlers, RMSE, zwischen einer theoretischen Fahrtrajektorie und einer realen Fahrtrajektorie des Zielfahrzeugs, wenn eine Anzahl von Fahrzeugen in jedem abnormalen Bereich K ist, Folgendes umfasst:

wenn die Anzahl von Fahrzeugen in dem abnormalen Bereich zu dem Zeitpunkt Ta K ist, zufälliges Erzeugen von Ortsinformationen und Geschwindigkeitsinformationen jedes Fahrzeugs in dem abnormalen Bereich zu dem Zeitpunkt Ta;

Berechnen einer theoretischen Trajektorie eines benachbarten Fahrzeugs vor dem Zielfahrzeug von dem Zeitpunkt Ta bis zu dem Zeitpunkt Tb basierend auf dem Algorithmus zur Erzeugung von Fahrzeugtrajektorien; und

Berechnen eines RMSE zwischen einer realen Trajektorie und der theoretischen Trajektorie des benachbarten Fahrzeugs vor dem Zielfahrzeug von Ta bis Tb basierend auf der theoretischen Fahrtrajektorie und der realen Fahrtrajektorie des benachbarten Fahrzeugs vor dem Zielfahrzeug.

5. Verfahren nach einem der Ansprüche 1 bis 4, wobei das Verfahren ferner Folgendes umfasst:

Bestimmen einer Länge des abnormalen Bereichs zu dem Zeitpunkt Ta; und

Bestimmen einer maximalen Anzahl N von Fahrzeugen in dem abnormalen Bereich basierend auf der Länge des abnormalen Bereichs, einer durchschnittlichen Fahrzeuglänge und einem Mindestabstand zwischen zwei benachbarten Fahrzeugen.

6. Verfahren nach einem der Ansprüche 1 bis 5, wobei das Verfahren ferner Folgendes umfasst:
Bestimmen von Algorithmen zur Erzeugung von Fahrzeugtrajektorien in verschiedenen Fahrszenarien, wobei die Algorithmen zur Erzeugung von Fahrzeugtrajektorien einen Algorithmus zur Erzeugung von Fahrzeugtrajektorien für Stadtstraßen und einen Algorithmus zur Erzeugung von Fahrzeugtrajektorien für Autobahnen umfassen.

7. Endgerätevorrichtung (200), umfassend:

eine Bestimmungseinheit (240), wobei die Bestimmungseinheit (240) dazu konfiguriert ist, ein aktuelles Fahrszenario eines Zielfahrzeugs basierend auf Fahrtrajektoriendaten, die unter Verwendung einer fahrzeugmontierten Vorrichtung des Zielfahrzeugs gesammelt werden, und einer aktuellen Echtzeitkarte des Zielfahrzeugs zu bestimmen, das Fahrszenario des Zielfahrzeugs ein Stadtstraßen-Fahrszenario oder ein Autobahn-Fahrszenario ist, und das Zielfahrzeug ein intelligentes und verbundenes Fahrzeug ist, das Radare oder Kameras in einer Warteschlange intelligenter und verbundener Fahrzeuge umfasst; und

eine Verarbeitungseinheit (210), wobei die Verarbeitungseinheit (210) dazu konfiguriert ist, einen Algorithmus zur Erzeugung von Fahrzeugtrajektorien in dem aktuellen Fahrszenario des Zielfahrzeugs basierend auf dem aktuellen Fahrszenario des Zielfahrzeugs auszuwählen;

die Verarbeitungseinheit (210) ferner dazu konfiguriert ist, mindestens einen abnormalen Bereich, der sich zu einem Zeitpunkt Tb vor dem Zielfahrzeug befindet, zu bestimmen, wobei der mindestens eine abnormale Bereich ein abnormaler Bereich der Warteschlange intelligenter und verbundener Fahrzeuge ist, in welcher sich das Zielfahrzeug befindet, und der Zeitpunkt Tb ein aktueller Zeitpunkt ist;

die Verarbeitungseinheit (210) ferner dazu konfiguriert ist, eine Anzahl von Fahrzeugen in jedem des mindestens einen abnormalen Bereichs und Ortsinformationen sowie Geschwindigkeitsinformationen jedes Fahrzeugs, das sich zu einem Zeitpunkt Ta in jedem abnormalen Bereich befindet, basierend auf dem ausgewählten Algorithmus zur Erzeugung von Fahrzeugtrajektorien und einem Algorithmus für maschinelles Lernen zu identifizieren, wobei der Zeitpunkt Ta ein Kalibrierungszeitpunkt in einem historischen Fahrprozess des Zielfahrzeugs ist; und

die Verarbeitungseinheit (210) ferner dazu konfiguriert ist, eine Anzahl von Fahrzeugen in jedem abnormalen Bereich und Ortsinformationen sowie Geschwindigkeitsinformationen jedes Fahrzeugs, das sich zu dem Zeitpunkt Tb in jedem abnormalen Bereich befindet, basierend auf dem ausgewählten Algorithmus zur Erzeugung von Fahrzeugtrajektorien und der Anzahl von Fahrzeugen in jedem abnormalen Bereich und den Ortsinformationen sowie den Geschwindigkeitsinformationen jedes Fahrzeugs, das sich zu dem Zeitpunkt Ta in jedem abnormalen Bereich befindet, zu identifizieren,

wobei,

wenn ein Radar oder eine Kamera in einem vorderen Teil jedes intelligenten und verbundenen Fahrzeugs in der Warteschlange intelligenter und verbundener Fahrzeuge konfiguriert ist, ein Abstand jedes des mindestens einen abnormalen Bereichs ein Bereich zwischen dem ersten intelligenten und verbundenen Fahrzeug, das benachbart an dem Anfang jedes abnormalen Bereichs liegt, und einem vorausfahrenden Fahrzeug, das benachbart an dem Ende jedes abnormalen Bereichs liegt, ist; oder

wenn Radare oder Kameras sowohl in einem vorderen Teil als auch in einem hinteren Teil jedes intelligenten und verbundenen Fahrzeugs in der Warteschlange intelligenter und verbundener Fahrzeuge konfiguriert sind, ein Abstand jedes des mindestens einen abnormalen Bereichs ein Bereich zwischen einem benachbarten Fahrzeug hinter dem ersten intelligenten und verbundenen Fahrzeug, das benachbart an dem Anfang jedes abnormalen Bereichs liegt, und einem vorausfahrenden Fahrzeug, das benachbart an dem Ende jedes abnormalen Bereichs liegt, ist.

8. Endgerätevorrichtung (200) nach Anspruch 7, wobei die Verarbeitungseinheit (210) insbesondere dazu konfiguriert ist:

einen mittleren quadratischen Fehler, RMSE, zwischen einer theoretischen Fahrtrajektorie und einer realen Fahrtrajektorie des Zielfahrzeugs zu berechnen, wenn die Anzahl von Fahrzeugen in jedem abnormalen Bereich K ist, wobei $K \in \{1, \cdots, N\}$, N ein Maximalwert N der Anzahl von Fahrzeugen ist, die sich in jedem abnormalen Bereich befinden, und die Werte von 1 bis N für K durchlaufen werden;

Ortsinformationen und Geschwindigkeitsinformationen jedes Fahrzeugs in dem abnormalen Bereich zu erlangen, wenn der RMSE eine erste Bedingung erfüllt; und

zu einem Zeitpunkt Ta eine Anzahl von Fahrzeugen und Ortsinformationen sowie Geschwindigkeitsinformationen jedes Fahrzeugs zu bestimmen, die einem RMSE entsprechen, der eine zweite Bedingung in N bestimmten RMSEs erfüllt.

9. Endgerätevorrichtung (200) nach Anspruch 7 oder 8, wobei die Verarbeitungseinheit (210) insbesondere dazu konfiguriert ist:

reale Fahrtrajektorien einer Vielzahl von intelligenten und verbundenen Fahrzeugen vor dem Zielfahrzeug von einem Zeitpunkt Tc bis zu dem Zeitpunkt Tb zu erlangen, wobei der Zeitpunkt Tc ein Kalibrierungszeitpunkt in dem historischen Fahrprozess des Zielfahrzeugs ist;

theoretische Fahrtrajektorien der Vielzahl von intelligenten und verbundenen Fahrzeugen vor dem Zielfahrzeug von dem Zeitpunkt Tc bis zu dem Zeitpunkt Tb zu berechnen;

eine Differenz zwischen einer theoretischen Fahrtrajektorie und einer realen Fahrtrajektorie von jedem der Vielzahl von intelligenten und verbundenen Fahrzeugen zu berechnen; und

den mindestens einen abnormalen Bereich, der sich zu dem Zeitpunkt Tb vor dem Zielfahrzeug befindet, basierend auf der Differenz zwischen der theoretischen Fahrtrajektorie und der realen Fahrtrajektorie jedes intelligenten und verbundenen Fahrzeugs und einem ersten Schwellenwert zu bestimmen.

10. Computerlesbares Speichermedium, wobei das computerlesbare Speichermedium ein Computerprogramm speichert und, wenn das Programm ausgeführt wird, das Verfahren nach einem der Ansprüche 1 bis 6 implementiert wird.

11. Chip, umfassend einen Prozessor und eine Schnittstelle, wobei
der Prozessor dazu konfiguriert ist, Anweisungen zu lesen, um das Verfahren nach einem der Ansprüche 1 bis 6 durchzuführen.

**Revendications**

1. Procédé d'identification d'un paramètre de véhicule anormal dans une file de véhicules, comprenant :

la détermination (S103) d'un scénario de conduite actuel d'un véhicule cible sur la base des données de trajectoire de conduite collectées à l'aide d'un dispositif monté sur véhicule du véhicule cible et d'une carte en temps réel actuelle du véhicule cible, dans lequel le scénario de conduite du véhicule cible est un scénario de conduite sur route urbaine ou un scénario de conduite sur autoroute, et le véhicule cible est un véhicule intelligent et connecté comprenant des radars ou des caméras dans une file de véhicules intelligents et connectés ;
la sélection d'un algorithme de génération de trajectoire de véhicule dans le scénario de conduite actuel du véhicule cible sur la base du scénario de conduite actuel du véhicule cible ;
la détermination d'au moins une zone anormale comprise devant le véhicule cible à un moment Tb, dans lequel l'au moins une zone anormale est une zone anormale de la file de véhicules intelligents et connectés dans laquelle se trouve le véhicule cible, et le moment Tb est un moment actuel ;
l'identification (S105, S108), sur la base de l'algorithme de génération de trajectoire de véhicule sélectionné et d'un algorithme d'apprentissage automatique, d'un nombre de véhicules dans chacune des au moins une zone anormale et les informations de localisation et les informations de vitesse de chaque véhicule compris dans chaque zone anormale à un moment Ta, dans lequel le moment Ta est un moment d'étalonnage dans un processus de conduite historique du véhicule cible ; et
l'identification (S106, S109), sur la base de l'algorithme de génération de trajectoire de véhicule sélectionné et du nombre de véhicules dans chaque zone anormale et des informations de localisation et des informations de vitesse de chaque véhicule compris dans chaque zone anormale au moment Ta, d'un nombre de véhicules dans chaque zone anormale et des informations de localisation et des informations de vitesse de chaque véhicule compris dans chaque zone anormale au moment Tb,
dans lequel
lorsqu'un radar ou une caméra est configuré à l'avant de chaque véhicule intelligent et connecté dans la file de véhicules intelligents et connectés, une distance de chacune des au moins une zone anormale est une zone entre le premier véhicule intelligent et connecté adjacent au début de chaque zone anormale et un véhicule devant qui est adjacent à la fin de chaque zone anormale ; ou
lorsque des radars ou des caméras sont configurés à l'avant et à l'arrière du véhicule intelligent et connecté, une distance de chacune des au moins une zone anormale est une zone entre un véhicule adjacent derrière le premier véhicule intelligent et connecté adjacent au début de chaque zone anormale et un véhicule devant qui est adjacent à la fin de chaque zone anormale.

2. Procédé selon la revendication 1, dans lequel l'identification (S105, S108), sur la base de l'algorithme de génération de trajectoire de véhicule sélectionné et d'un algorithme d'apprentissage automatique, d'un nombre de véhicules dans chacune des au moins une zone anormale et des informations de localisation et des informations de vitesse de chaque véhicule compris dans chaque zone anormale à un moment Ta comprend :

le calcul d'une erreur quadratique moyenne RMSE entre une trajectoire de conduite théorique et une trajectoire de conduite réelle du véhicule cible lorsque le nombre de véhicules dans chaque zone anormale est $K$, dans lequel $K \in \{1, \cdots, N\}$, N est une valeur maximale N du nombre de véhicules compris dans chaque zone anormale, et les valeurs de 1 à N sont parcourues pour K ;
l'obtention des informations de localisation et des informations de vitesse de chaque véhicule dans la zone anormale lorsque la RMSE satisfait à une première condition ; et
à un moment Ta, la détermination d'un nombre de véhicules et des informations de localisation et des informations de vitesse de chaque véhicule qui correspondent à une RMSE satisfaisant à une seconde condition dans N RMSE déterminées.

3. Procédé selon la revendication 1 ou 2, dans lequel la détermination d'au moins une zone anormale comprise devant le véhicule cible à un moment Tb comprend :

l'obtention de trajectoires de conduite réelles d'une pluralité de véhicules intelligents et connectés devant le véhicule cible d'un moment Tc au moment Tb, dans lequel le moment Tc est un moment d'étalonnage dans le processus de conduite historique du véhicule cible ;
le calcul des trajectoires de conduite théoriques de la pluralité de véhicules intelligents et connectés devant le véhicule cible, du moment Tc au moment Tb ;
le calcul d'une différence entre une trajectoire de conduite théorique et une trajectoire de conduite réelle pour chacun de la pluralité de véhicules intelligents et connectés ; et
la détermination, sur la base de la différence entre la trajectoire de conduite théorique et la trajectoire de conduite réelle de chaque véhicule intelligent et connecté et d'un premier seuil, de l'au moins une zone anormale comprise devant le véhicule cible au moment Tb.

4. Procédé selon l'une quelconque des revendications 1 à 3, dans lequel le calcul de l'erreur quadratique moyenne RMSE entre une trajectoire de conduite théorique et une trajectoire de conduite réelle du véhicule cible lorsque le nombre de véhicules dans chaque zone anormale est K comprend :

lorsque le nombre de véhicules dans la zone anormale au moment Ta est K, la génération aléatoire d'informations de localisation et d'informations de vitesse de chaque véhicule dans la zone anormale au moment Ta ;
le calcul d'une trajectoire théorique d'un véhicule adjacent devant le véhicule cible, du moment Ta au moment Tb, sur la base de l'algorithme de génération de trajectoire de véhicule ; et
le calcul d'une RMSE entre une trajectoire réelle et la trajectoire théorique du véhicule adjacent devant le véhicule cible de Ta à Tb sur la base de la trajectoire de conduite théorique et de la trajectoire de conduite réelle du véhicule adjacent devant le véhicule cible.

5. Procédé selon l'une quelconque des revendications 1 à 4, dans lequel le procédé comprend en outre :

la détermination de la longueur de la zone anormale au moment Ta ; et
la détermination d'un nombre maximal N de véhicules dans la zone anormale sur la base de la longueur de la zone anormale, d'une longueur moyenne de véhicule et d'un écart minimal entre deux véhicules adjacents.

6. Procédé selon l'une quelconque des revendications 1 à 5, dans lequel le procédé comprend en outre :
la détermination d'algorithmes de génération de trajectoire de véhicule dans différents scénarios de conduite, dans lequel les algorithmes de génération de trajectoire de véhicule comprennent un algorithme de génération de trajectoire de véhicule urbain et un algorithme de génération de trajectoire de véhicule sur autoroute.

7. Dispositif terminal (200), comprenant :

une unité de détermination (240) dans lequel l'unité de détermination (240) est configurée pour déterminer un scénario de conduite actuel d'un véhicule cible sur la base des données de trajectoire de conduite collectées à l'aide d'un dispositif monté sur véhicule du véhicule cible et d'une carte en temps réel actuelle du véhicule cible, le scénario de conduite du véhicule cible est un scénario de conduite sur route urbaine ou un scénario de conduite sur autoroute, et le véhicule cible est un véhicule intelligent et connecté comprenant des radars ou des caméras dans une file de véhicules intelligents et connectés ; et
une unité de traitement (210), dans lequel l'unité de traitement (210) est configurée pour sélectionner un algorithme de génération de trajectoire de véhicule dans le scénario de conduite actuel du véhicule cible sur la base du scénario de conduite actuel du véhicule cible ;
l'unité de traitement (210) est configurée en outre pour déterminer au moins une zone anormale comprise devant le véhicule cible à un moment Tb, dans lequel l'au moins une zone anormale est une zone anormale de la file de véhicules intelligents et connectés dans laquelle se trouve le véhicule cible, et le moment Tb est un moment actuel ;
l'unité de traitement (210) est en outre configurée pour identifier, sur la base de l'algorithme de génération de trajectoire de véhicule sélectionné et d'un algorithme d'apprentissage automatique, un nombre de véhicules dans chacune des au moins une zone anormale et les informations de localisation et les informations de vitesse de chaque véhicule compris dans chaque zone anormale à un moment Ta, dans lequel le moment Ta est un moment d'étalonnage dans un processus de conduite historique du véhicule cible ; et
l'unité de traitement (210) est en outre configurée pour identifier, sur la base de l'algorithme de génération de trajectoire de véhicule sélectionné et du nombre de véhicules dans chaque zone anormale et des informations de localisation et des informations de vitesse de chaque véhicule compris dans chaque zone anormale au moment Ta, un nombre de véhicules dans chaque zone anormale et les informations de localisation et les informations de vitesse de chaque véhicule compris dans chaque zone anormale au moment Tb,

dans lequel

lorsqu'un radar ou une caméra est configuré à l'avant de chaque véhicule intelligent et connecté dans la file de véhicules intelligents et connectés, une distance de chacune des au moins une zone anormale est une zone entre le premier véhicule intelligent et connecté adjacent au début de chaque zone anormale et un véhicule devant qui est adjacent à la fin de chaque zone anormale ; ou

lorsque des radars ou des caméras sont configurés à l'avant et à l'arrière de chaque véhicule intelligent et connecté dans la file de véhicules intelligents et connectés, une distance de chacune des au moins une zone anormale est une zone entre un véhicule adjacent derrière le premier véhicule intelligent et connecté adjacent au début de chaque zone anormale et un véhicule devant qui est adjacent à la fin de chaque zone anormale.

8. Dispositif terminal (200) selon la revendication 7, dans lequel l'unité de traitement (210) est spécifiquement configurée pour :

calculer une erreur quadratique moyenne RMSE entre une trajectoire de conduite théorique et une trajectoire de conduite réelle du véhicule cible lorsque le nombre de véhicules dans chaque zone anormale est K, dans lequel K E {1, ⋯ , N}, N est une valeur maximale N du nombre de véhicules compris dans chaque zone anormale, et les valeurs de 1 à N sont parcourues pour K ;

obtenir des informations de localisation et des informations de vitesse de chaque véhicule dans la zone anormale lorsque la RMSE satisfait à une première condition ; et

à un moment Ta, déterminer un nombre de véhicules et les informations de localisation et les informations de vitesse de chaque véhicule qui correspondent à une RMSE satisfaisant à une seconde condition dans N RMSE déterminées.

9. Dispositif terminal (200) selon la revendication 7 ou 8, dans lequel l'unité de traitement (210) est spécifiquement configurée pour :

obtenir des trajectoires de conduite réelles d'une pluralité de véhicules intelligents et connectés devant le véhicule cible d'un moment Tc au moment Tb, dans lequel le moment Tc est un moment d'étalonnage dans le processus de conduite historique du véhicule cible ;

calculer des trajectoires de conduite théoriques de la pluralité de véhicules intelligents et connectés devant le véhicule cible du moment Tc au moment Tb ;

calculer une différence entre une trajectoire de conduite théorique et une trajectoire de conduite réelle pour chacun de la pluralité des véhicules intelligents et connectés ; et

déterminer, sur la base de la différence entre la trajectoire de conduite théorique et la trajectoire de conduite réelle de chaque véhicule intelligent et connecté et d'un premier seuil, l'au moins une zone anormale comprise devant le véhicule cible au moment Tb.

10. Support de stockage lisible par ordinateur, dans lequel le support de stockage lisible par ordinateur stocke un programme informatique, et lorsque le programme informatique est exécuté, le procédé selon l'une quelconque des revendications 1 à 6 est mis en œuvre.

11. Puce, comprenant un processeur et une interface, dans laquelle
le processeur est configuré pour lire des instructions pour réaliser le procédé selon l'une quelconque des revendications 1 à 6.

50    Vehicle queue    40

$C_N$    P4    T2    P3    P2    P1    T1    $C_M$

FIG. 1a

90    Vehicle queue    120

$C_N$    P4    P3    P2    P1    $C_M$

FIG. 1b

In this sight distance,
P1 is the first vehicle

Intelligent and
connected
vehicle

V2X communication
sight distance A

In this sight distance,
P2 is the first vehicle

V2X communication
sight distance B

P7    P6    P5    P4    P3    P2    P1

FIG. 2

FIG. 3a

Moment K

Moment K+P

FIG. 3b

Moment K

Moment K+P

FIG. 3c

FIG. 4

100

S101: Start

S102: Collect vehicle driving data

City road     S103: Determine a driving scenario     Highway

S104: Whether an abnormal area exists     No     No     S107: Whether an abnormal area exists

Yes     Yes

City-road vehicle trajectory generation algorithm

S105: Identify a number of vehicles and GPS information in the abnormal area at a moment Ta

S108: Identify a number of vehicles and GPS information in the abnormal area at a moment Ta

Highway vehicle trajectory generation algorithm

S106: Identify a number of vehicles and GPS information in the abnormal area at a moment Tb

S109: Identify a number of vehicles and GPS information in the abnormal area at a moment Tb

S110: End

FIG. 5

Intelligent and connected vehicle   Common vehicle   Traffic light

P5   P4   P3   P2   P1   V2   V1

FIG. 6

Distance

Phase of a traffic light

Real driving trajectory of P1

P1
P2
P3
P4
P5

Ta                                                          Tb
                                                                Time

FIG. 7

P9   P8   P7   P6   P5   P4   P3   P2   P1

FIG. 8

FIG. 9

Intelligent and connected vehicle

Common vehicle (without a V2X function)

Abnormal area of a
vehicle queue

P6   P5   V2   V1   P3   P2   P1

Intelligent and connected vehicle

Common vehicle (without the V2X function)

Abnormal area of the
vehicle queue

P6   P5   VN   V2   V1   P3   P2

$L_{Gap}$

$L_{UA,Ta}$

$L_{veh}$

$L_{P5,Ta}$

$L_{P3,Ta}$

FIG. 10

Distance

Real driving trajectory of P2

P2

V1

V2

V3

P3

Theoretical driving trajectory of P3

Real driving trajectory of P3

Ta

**Scenario 1: Highway**

Tb Time

FIG. 11

Phase of a traffic light

Distance

Real driving trajectory of P2

P2

V1

V2

V3

P3

Theoretical driving trajectory of P3

Real driving trajectory of P3

Ta

**Scenario 2: City road**

Tb Time

FIG. 12

FIG. 13a

FIG. 13b

FIG. 14a

FIG. 14b

FIG. 15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018190119 A1